(19) Europäisches Patentamt
European Patent Office
Office européen des brevets

(11) EP 0 730 182 B1

(12) EUROPEAN PATENT SPECIFICATION

(45) Date of publication and mention of the grant of the patent:
**29.06.2005 Bulletin 2005/26**

(51) Int Cl.⁷: **G02B 26/10**

(21) Application number: **96301275.2**

(22) Date of filing: **26.02.1996**

# (54) Scanning optical apparatus

Optisches Abtastgerät

Appareil de balayage optique

(84) Designated Contracting States:
**DE FR GB**

(30) Priority: **28.02.1995 JP 6699195**
**08.02.1996 JP 4674196**

(43) Date of publication of application:
**04.09.1996 Bulletin 1996/36**

(60) Divisional application:
**01204171.1 / 1 199 592**

(73) Proprietor: **CANON KABUSHIKI KAISHA**
**Tokyo (JP)**

(72) Inventor: **Kato, Manabu**
**Ohta-ku, Tokyo (JP)**

(74) Representative:
**Beresford, Keith Denis Lewis et al**
**BERESFORD & Co.**
**16 High Holborn**
**London WC1V 6BX (GB)**

(56) References cited:
**EP-A- 0 441 350**
**EP-A- 0 461 660**
**EP-A- 0 559 423**
**US-A- 4 799 747**
**US-A- 5 148 639**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 730 182 B1

## Description

This invention relates to a scanning optical apparatus and a multibeam scanning optical apparatus, and particularly to a scanning optical apparatus and a multibeam scanning optical apparatus suitable for use, for example, in an apparatus such as a laser beam printer (LBP) or a digital copying apparatus having the electrophotographic process adapted to deflect and reflect a beam of light optically modulated and emitted from light source means by a light deflector (deflecting element) comprising a rotatable polygon mirror or the like, thereafter optically scan a surface to be scanned through an imaging optical system having the fθ characteristic (fθ lens) and record image information.

Heretofore, in the scanning optically apparatus of a laser beam printer or the like, a beam of light optically modulated and emerging from light source means in conformity with an image signal has been periodically deflected by a light deflector comprising, for example, a rotatable polygon mirror and has been converged into a spot-like shape on the surface of a photosensitive recording medium (photosensitive drum) having the fθ characteristic, and that surface has been optically scanned to thereby effect image recording.

Figure 1 of the accompanying drawings is a schematic view of the essential portions of a scanning optical apparatus according to the prior art.

In Figure 1, a divergent beam of light emitted from light source means 61 is made into a substantially parallel beam of light by a collimator lens 62, and the beam of light (the quantity of light) is limited by a stop 63 and enters a cylindrical lens 64 having predetermined refractive power only in a sub scanning direction. Of the parallel beam of light having entered the cylindrical lens 64, that part in a main scanning section intactly emerges in the state of a parallel beam of light. Also, that part in a sub scanning section converges and is imaged as a substantially linear image on the deflecting surface (reflecting surface) 65a of a light deflector 65 comprising a rotatable polygon mirror. Here, the main scanning section refers to a beam section the beam of light deflected and reflected by the deflecting surface of the light deflector forms with time. Also, the sub scanning section refers to a section containing the optical axis of an fθ lens and orthogonal to the main scanning section. The beam of light deflected and reflected by the deflecting surface 65a of the light deflector 65 is directed onto the surface of a photosensitive drum 68 as a surface to be scanned through an imaging optical system (fθ lens) 66 having the fθ characteristic, and the light deflector 65 is rotated in the direction of arrow A to thereby optically scan the surface of the photosensitive drum 68 and effect the recording of image information.

To effect the highly accurate recording of image information in a scanning optical apparatus of this kind, it is necessary that curvature of image field be well corrected over the entire area of a surface to be scanned and a spot diameter be uniform and that the angle and image height of the incident light have distortion (fθ characteristic) in which they are in a proportional relation. A scanning optical apparatus satisfying such optical characteristics or the correcting optical system (fθ lens) thereof has heretofore been variously proposed.

On the other hand, with the tendency of laser beam printers, digital copying apparatuses, etc. toward compactness and lower cost, similar things are required of the scanning optical apparatus.

As an apparatus which makes these requirements compatible, a scanning optical apparatus in which the fθ lens is comprised of a single lens is variously proposed, for example, in Japanese Patent Publication No. 61-48684, Japanese Laid-Open Patent Application No. 63-157122, Japanese Laid-Open Patent Application No. 4-104213, Japanese Laid-Open Patent Application No. 4-50908, etc.

Of these publications, in Japanese Patent Publication No. 61-48684 and Japanese Laid-Open Patent Application No. 63-157122, a concave single lens as on fθ lens is used on the light deflector side to converge a parallel beam of light from a collimator lens on the surface of a recording medium. Also, in Japanese Laid-Open Patent Application No. 4-104213, as fθ lenses, a concave single lens and a toroidal-surfaced single lens are used on the light deflector side and the image plane side, respectively, to make a beam of light converted into convergent light by a collimator lens enter the fθ lenses. Also, in Japanese Laid-Open Patent Application No. 4-50908, a single lens introducing a high-order aspherical surface into a lens surface is used as an fθ lens to make a beam of light converted into convergent light by a collimator lens enter the fθ lens.

However, in the scanning optical apparatuses according to the prior art described above, according to Japanese Patent Publication No. 61-48684, curvature of image field in the sub scanning direction remains and a parallel beam of light is imaged on the surface to be scanned, and this has led to the problem that the distance from the fθ lens to the surface to the scanned becomes a focal length f and is long and it is difficult to construct a compact scanning optical apparatus. In Japanese Laid-Open Patent Application No. 63-157122, the thickness of the fθ lens is great, and this has led to the problem that manufacture by molding is difficult and this makes a factor of increased cost. Japanese Laid-Open Patent Application No. 4-104213 has suffered from the problem that distortion remains. In Japanese Laid-Open Patent Application No. 4-50908, an fθ lens having a high-order aspherical surface is used and aberrations are corrected well, but there has been the problem that jitter of a period corresponding to the number of polygon surfaces occurs due to the mounting error of a polygon mirror which is a light deflector.

Further, problems common to these fθ lenses each comprised of a single lens has included the problem that due to the non-uniformity of the lateral magnification in the sub scanning direction between the light deflector and the surface to be scanned, the spot diameter in the sub scanning direction changes depending on image height.

Figures 2A and 2B of the accompanying drawings are cross-sectional views of the essential portions of a single beam scanning optical apparatus in the main scanning direction and the sub scanning direction, respectively, which apparatus has been proposed by the inventor in Japanese Patent Application No. 6-239386 (filed on September 6, 1994), and show changes in the spot diameter (F number) in the sub scanning direction due to image height. In these figures, the same elements as the elements shown in Figure 1 are given the same reference numerals.

Usually, in a plane inclination correcting optical system, it is necessary to bring the deflecting surface of a light deflector and a surface to be scanned into an optically conjugate relation (imaging relation) in order to optically correct the plane inclination of the deflecting surface. Accordingly, in an fθ lens having a predetermined lens shape in the main scanning section as in the aforedescribed examples of the prior art, lateral magnification is high on the axis (on-axis beam 21) as indicated at (1) in Figure 2B, and lateral magnification becomes low off the axis (most off-axis beam 22) as indicated at (2) in Figure 2B (there is also a case where this becomes converse depending on the lens shape in the main scanning section).

Thus, irregularity occurs to the lateral magnification in the sub scanning direction depending on the lens shape of the fθ lens in the main scanning plane thereof and a change in the spot diameter in the sub scanning direction due to image height occurs.

On the other hand, the ability of higher speed scanning is required of a scanning optical apparatus for use in an LBP because of the tendency of the LBP toward higher speed and higher accuracy, and from limitations such as the number of revolutions of a motor which is scanning means and the number of surfaces of a polygon mirror which is deflecting means, particularly the demand for a multibeam scanning optical apparatus capable of scanning a plurality of beams of light at a time is growing.

The above-described non-uniformity of the lateral magnification in the sub scanning direction makes the curve of the scanning line when the position of a light source (light source unit) is off the optical axis in Z direction indicated in Figures 2A and 2B and therefore, an optical system such as a multibeam scanning optical system (multibeam scanning optical apparatus) which scans a surface to be scanned at a time by the use of a plurality of beams of light off the optical axis has suffered from the problem that the scanning line bends on the surface to be scanned and as a result, the deterioration of image quality due to pitch irregularity occurs.

It is a first object of the present invention to provide a compact scanning optical apparatus suitable for highly accurate printing in which when a beam of light from a light source converted by a collimator lens or the like is to be imaged on a surface to be scanned by an fθ lens through a light deflector, the lens shape (the main scanning plane shape) of the fθ lens in the main scanning plane thereof is optimized to thereby correct curvature of image field, distortion, etc. and the non-uniformity of lateral magnification in the sub scanning direction between the light deflector and the surface to be scanned is eliminated by only the lens shape (the sub scanning plane shape) in the sub scanning plane, independently of the lens shape in the main scanning plane, whereby any change in F number (F No.) in the sub scanning direction due to image height, i.e., any change in spot diameter, can be suppressed.

It is a second object of the present invention to provide a compact multibeam scanning optical apparatus suitable for highly accurate printing in which a plurality of beams of light from a light source converted by a collimator lens or the like is to be imaged on a surface to be scanned by an fθ lens through a light deflector, the lens shape (the main scanning plane shape) of the fθ lens in the main scanning plane thereof is optimized to thereby correct curvature of image field, distortion, etc. and the non-uniformity of lateral magnification in the sub scanning direction between the light deflection and the surface to be scanned is eliminated by only the lens shape (the sub scanning plane shape) in the sub scanning plane, independently of the lens shape in the main scanning plane, whereby any change F number (F No.) in the sub scanning direction in spot diameter, can be suppressed and a beam of light from the light source which is off the optical axis in the sub scanning direction can also be scanned highly accurately without the curve of the scanning line occurring.

According to the present invention, there is provided a scanning optical apparatus comprising:

light source means for emitting a divergent beam;

characterized by:

a deflecting element for deflecting a beam of light emitted from said light source means;

optical means including a first optical element for converting the divergent beam into a parallel beam and a second optical element for forming an image of said light source means on the deflecting surface of said deflecting element as a linear shape spot elongated in the main scanning direction;

a third optical element for causing the beam of light deflected by said deflecting element to be imaged into a spot-like shape on a surface to be scanned, said third optical element comprising a single lens, the opposing lens surfaces of the third optical element having toric power and comprising a non-circular cross-section in the main scanning plane, and the curvature of said opposite lens surfaces in the sub scanning plane being continuously varied from the on-axis toward the off-axis in the effective portion of the lens to provide a substantially constant image magnification in the sub scanning direction over the effective portion of the lens.

A number of embodiments of the invention will now be described, by way of example only, with reference to the accompanying drawings in which:

Figure 1 is a schematic view of the essential portions of the optical system of a scanning optical apparatus according to the prior art.
Figures 2A and 2B are cross-sectional views of the essential portions of the scanning optical apparatus according to the prior art in the main scanning direction and the sub scanning direction, respectively.
Figure 3 is a cross-sectional view of the essential portions of a scanning optical apparatus between a deflecting element and a surface to be scanned in the main scanning direction.
Figures 4A and 4B are cross-sectional views of the essential portions of Embodiment 1 of the present invention in the main scanning direction and the sub scanning direction, respectively.
Figure 5 is an illustration showing the aspherical surface shape of an fθ lens in Embodiment 1 of the present invention.
Figure 6 is an illustration showing the shape of the fθ lens in Embodiment 1 of the present invention in the main scanning direction.
Figure 7 is an illustration showing the defocus characteristic of a spot diameter in the sub scanning direction on a surface to be scanned in Embodiment 1 of the present invention.
Figures 8A and 8B are cross-sectional views of the essential portions of Embodiment 2 of the present invention in the main scanning direction and the sub scanning direction, respectively.
Figure 9 is an illustration showing the aspherical surface shape of an fθ lens in Embodiment 2 of the present invention.
Figure 10 is an illustration showing the defocus characteristic of the spot diameter in the sub scanning direction on a surface to be scanned in Embodiment 2 of the present invention.
Figure 11 is an illustration showing the defocus characteristic of a spot diameter in the sub scanning direction on a surface to be scanned in Embodiment 2 of the present invention.
Figures 12A and 12B are cross-sectional views the essential portions of Embodiment 3 of the present invention in the main scanning direction and the sub scanning direction, respectively.
Figure 13 is an illustration showing the aspherical surface shape of an fθ lens in Embodiment 3 of the present invention.
Figure 14 is an illustration showing the shape of the fθ lens in the main scanning direction in Embodiment 3 of the present invention.
Figure 15 is an illustration showing the curve of a scanning line in Embodiment 3 of the present invention.
Figures 16A and 16B are cross-sectional views of the essential portions of Embodiment 4 of the present invention in the main scanning direction and the sub scanning direction, respectively.
Figure 17 is an illustration showing a change in F number in the sub scanning direction on a surface to be scanned relative to image height in Embodiment 4 of the present invention.
Figure 18 is an illustration showing the curvature of an fθ lens in the meridian-line direction relative to image height in Embodiment 4 of the present invention.
Figure 19 is an illustration showing the curvature of a scanning line during multibeam scanning at resolution 600 dpi (scanning line interval 42.3 μm) in Embodiment 4 of the present invention.
Figures 20A and 20B are cross-sectional views of the essential portions of Embodiment 5 of the present invention in the main scanning direction and the sub scanning direction, respectively.
Figure 21 is an illustration showing a change of F number in the sub scanning direction on a surface to be scanned relative to image height in Embodiment 5 of the present invention.
Figure 22 is an illustration showing the curvature of an fθ lens in the meridian-line direction relative to image height in Embodiment 5 of the present invention.
Figure 23 is an illustration showing the curve of a scanning line during multibeam scanning at resolution 600 dpi (scanning line interval 42.3 μm) in Embodiment 5 of the present invention.
Figures 24A and 24B are cross-sectional views of the essential portions of Embodiment 6 of the present invention in the main scanning direction and the sub scanning direction, respectively.
Figure 25 is an illustration showing a change of F number in the sub scanning direction on a surface to be scanned relative to image height in Embodiment 6 of the present invention.
Figure 26 is an illustration showing the curvature of an fθ lens in the meridian-line direction relative to image height in Embodiment 6 of the present invention.

Figure 27 is an illustration showing the curve of a scanning line during multibeam scanning at resolution 600 dpi (scanning line interval 42.3 μm) in Embodiment 6 of the present invention.

Figures 28A and 28B are cross-sectional views of the essential portions in the main scanning direction and the sub scanning direction, respectively, when multibeam scanning was effected by the use of the prior-art single beam scanning optical apparatus shown in Figures 2A and 2B.

Figure 29 is an illustration showing a change of F number in the sub scanning direction on a surface to be scanned relative to image height in the single beam scanning optical apparatus shown in Figures 28A and 28B.

Figure 30 is an illustration showing the curvature of an fθ lens in the meridian-line direction relative to image height in the single beam scanning optical apparatus shown in Figures 28A and 28B.

Figure 31 is an illustration showing the curve of a scanning line during multibeam scanning at resolution 600 dpi (scanning line interval 42.3 μm) in the single beam scanning optical apparatus shown in Figures 28A and 28B.

Before some embodiments of the scanning optical apparatus of the present invention are described, means for achieving the objects of the present invention will first be described. To achieve the above-described objects in the scanning optical apparatus, it is necessary to optimize the lens shape of the fθ lens and to uniformize the lateral magnifications in the sub scanning direction on the axis and off the axis.

Figure 3 is a cross-sectional view of the essential portions in the main scanning direction between the light deflector (deflecting element) of the scanning optical apparatus and the surface to be scanned. To uniformize the lateral magnifications in the sub scanning direction on the axis and off the axis, it is necessary to determine the principal plane position so that the ratios of the lengths of optical path on the axis and off the axis may be equal to each other.

Accordingly, the principal plane position of the fθ lens in the sub scanning direction is determined so as to satisfy the following conditions:

$$\text{Ipri} : \text{Epri} = \text{Imar} : \text{Emar}$$

$$\text{Ipri} \bullet \text{Emar} = \text{Epri} \bullet \text{Emar} \qquad \text{(a)}$$

where

- Ipri: the distance from the deflecting surface of the light deflector to the front side principal plane in the sub scanning direction in the on-axis beam;
- Epri: the distance from the rear side principal plane in the sub scanning direction to the surface to be scanned in the on-axis beam;
- Imar: the distance from the deflecting surface of the light deflector to the front side principal plane in the sub scanning direction in the most off-axis beam;
- Emar: the distance from the rear side principal plane in the sub scanning direction to the surface to be scanned in the most off-axis beam.

In the present context the term "principal plane" is not used in the conventionally understood manner. Its meaning is evident from figure 3.

Generally, the off-axis beam is refracted in the direction of the optical axis in the main scanning plane in order to satisfy the fθ characteristic and therefore, a focus 71 in the main scanning plane of the principal plane in the sub scanning direction for satisfying the above expression (a) is a plane curved toward a light deflector 5 off the axis as shown in Figure 3. Here, when the curve amount on the most off-axis is dx,

$$\text{Emar} = (\text{Epri}+\text{dx})/\cos\theta\text{img}$$

$$\text{Imar} = (\text{Ipri}-\text{dx})/\cos\theta\text{por}$$

and consequently,

$$\text{Ipri}(\text{Epri}+\text{dx})/\cos\theta\text{img} = \text{Epri}(\text{Ipri}-\text{dx})/\cos\theta\text{img}$$

$$\text{dx}(\text{Ipri}\cdot\cos\theta\text{por}+\text{Epri}\cdot\cos\theta\text{img})$$

$$= Ipri \cdot Epri(\cos\theta img - \cos\theta por)$$

$$dx = \frac{Ipri \cdot Epri\ (\cos\theta img - \cos\theta por)}{Ipri \cdot \cos\theta por + Epri \cdot \cos\theta img} \qquad (b)$$

where

θpor: the angle formed in the main scanning plane by the most off-axis beam deflected by the light deflector with respect to the optical axis of the fθ lens;

θimg: the angle formed in the main scanning plane by the most off-axis beam incident on the surface to be scanned with respect to the optical axis of the fθ lens.

Accordingly, to uniformize the lateral magnification in the sub scanning direction, it is necessary to set the curve amount dx of the locus of the principal plane in the sub scanning direction to a value derived from the above expression (b).

That is, when in an actual scanning optical apparatus, the curve amounts of the loci, in the main scanning plane, of the front side principal plane and the rear side principal plane of an fθ lens in the sub scanning direction (the difference in the direction of the optical axis between the most off-axis principal plane position and the on-axis principal plane position) are xm and xu, respectively, it is desirable to determine the principal plane position so as to satisfy the condition that

$$xm \leq dx \leq xu \qquad (1)$$

If the above conditional expression (1) is departed from, irregularity will occur to the lateral magnification in the sub scanning direction and the change in spot diameter due to image height will become great, and this will pose a problem in practice.

Next, as regards a method of changing the principal plane position in the sub scanning direction, the deflecting surface of the light deflector and the surface to be scanned are brought into optically conjugate relationship with each other in the sub scanning direction of the fθ lens as previously described to thereby effect the correction of plane inclination and therefore, the refractive power itself of the fθ lens cannot be varied.

Accordingly, the first lens surface (R1 surface) and the second lens surface (R2 surface) of the fθ lens in the sub scanning direction are bent to thereby effect the movement of the principal plane position. By the bending, the principal plane of the lens can be moved without the refractive power of the lens itself being changed and therefore, the meridian line r is continuously changed from the on-axis toward the off-axis and an optimum lens shape can be provided depending on location, whereby the lateral magnification in the sub scanning direction can be uniformized.

By optimizing the lens shape of the fθ lens in this manner, the F number (F No.) in the sub scanning direction of the beam of light incident on the surface to be scanned can be uniformized, and the variation in the spot diameter in the sub scanning direction due to image height which has heretofore been a problem peculiar to a single-lens fθ lens can be minimized.

Also for a beam of light emerging from a light source (light source unit) off the optical axis, the surface to be scanned can be highly accurately scanned without causing the curve of the scanning line, whereby there can be provided a scanning optical apparatus suitable also for multibeam scanning.

Some embodiments of the present invention will now be described.

Figures 4A and 4B are cross-sectional views of Embodiment 1 of the present invention in the main scanning direction and the sub scanning direction, respectively.

In these figures, reference numeral 1 designates light source means (a light source unit) comprising, for example, a semiconductor laser.

Reference numeral 2 denotes a collimator lens as a first optical element which converts a divergent beam of light emitted from the light source means 1 into a convergent beam of light. Reference numeral 3 designates an aperture stop which regularizes the diameter of the beam of light passing therethrough.

Reference numeral 4 denotes a cylindrical lens as a second optical element which has predetermined refractive power only in the sub scanning direction and causes the beam of light passed through the aperture stop 3 to be imaged as a substantially linear image on the deflecting surface 5a of a light deflector (deflecting element) 5 which will be described later in the sub scanning section.

Reference numeral 5 designates a light deflector as a deflecting element which comprises, for example, a polygon mirror (rotatable polygon mirror) and is rotated at a predetermined speed in the direction of arrow A by drive means (not shown) such as a motor.

Reference numeral 6 denotes an fθ lens (imaging optical system) as a third optical element comprising a lens having the fθ characteristic and disposed more toward the light deflector 5 side than the intermediate portion between the light deflector 5 and a photosensitive drum surface 8 as a surface to be scanned. In the present embodiment, the opposite lens surface of the fθ lens 6 both comprise a toric surface which is aspherical in the main scanning plane, and continuously varies the curvature in the sub scanning plane (a plane containing the optical axis of the third optical element and orthogonal to the main scanning plane) from the on-axis toward the off-axis in the effective portion of the lens. Thereby, in Embodiment 1, the change in F number (F No.) in the sub scanning direction due to the image height of the beam of light incident on the surface 8 to be scanned, i.e., the change in spot diameter, is minimized. The fθ lens 6 causes the beam of light based on image information deflected and reflected by the light deflector 5 to be imaged on the photosensitive drum surface 8 and corrects the plane inclination of the deflecting surface of the light deflector 5.

In Embodiment 1, the fθ lens 6 may be made by plastic molding or may be made by glass molding.

In Embodiment 1, the divergent beam of light emitted from the semiconductor laser 1 is converted into a convergent beam of light by the collimator lens 2, and this beam of light (the quantity of light) is limited by the aperture stop 3 and enters the cylindrical lens 4. The beam of light having entered the cylindrical lens 4, in the main scanning section, emerges therefrom intactly in that state. Also, in the sub scanning section, it converges and is imaged as a substantially linear image (a linear image long in the main scanning direction) on the deflecting surface 5a of the light deflector 5. The beam of light deflected and reflected by the deflecting surface 5a of the light deflector 5 is directed onto the photosensitive drum surface 8 through the fθ lens 6 having different refractive powers in the main scanning direction and the sub scanning direction, and scans the photosensitive drum surface 8 in the direction of arrow B by the light deflector 5 being rotated in the direction of arrow A. Thereby, image recording is effected on the photosensitive drum 8 which is a recording medium.

In Embodiment 1, the lens shape of the fθ lens in the main scanning direction is an aspherical surface shape which can be represented by a function up to the tenth-order, and the lens shape in the sub scanning direction is comprised of a spherical surface continuously varying in the direction of image height. The lens shape, when for example, the point of intersection between the fθ lens and the optical axis is the origin and the direction of the optical axis is the X-axis and the axis orthogonal to the optical axis in the main scanning plane is the Y-axis and the axis orthogonal to the optical axis in the sub scanning plane is the Z-axis, is such that the generating-line direction corresponding to the main scanning direction can be represented by the following expression:

$$X=\frac{Y^2/R}{1+(1-(1+K)\,(Y/R)^2)^{1/2}}+B_4Y^4+B_6Y^6+B_8Y^8+B_{10}Y^{10}, \qquad (c)$$

(where R is the radius of curvature, K, $B_4$, $B_6$, $B_8$ and $B_{10}$ are aspherical surface coefficients) and the meridian-line direction corresponding to the sub scanning direction (the direction orthogonal to the main scanning direction containing the optical axis) can be represented by the following expression:

$$S=\frac{Z^2/r'}{1+(1-(Z/r')^2)^{1/2}}, \qquad (d)$$

(where $r'=r(1+D_2Y^2+D_4Y^4+D_6Y^6+D_8Y^8+D_{10}Y^{10})$.

Table 1 below shows the optical arrangement in Embodiment 1 and the aspherical surface coefficients of the fθ lens 6.

Table 1 (Embodiment 1)

| | | | shape of fθ lens | | |
|---|---|---|---|---|---|
| wavelength used | λ(nm) | 780 | | 1st surface | 2nd surface |
| refractive index of fθ lens | n | 1.519 | R | 6.7814E+01 | 1.6154E+02 |
| angle of incidence on polygon | θi | -90 | K | -1.6787E+01 | -1.0814E+02 |
| maximum angle of emergence from polygon | θmax | 45 | B4 | -9.8604E-07 | -2.2909E-06 |
| polygon - fθ lens | e | 36 | B6 | 1.5479E-11 | 7.1426E-10 |
| center thickness of fθ lens | d | 11 | B8 | 8.7055E-14 | -3.2030E-13 |
| fθ lens - surface to be scanned | Sk | 110.5 | B10 | -4.7942E-18 | 7.9836E-17 |
| maximum effective diameter of fθ lens | Ymax | 42 | r | -2.7332E+01 | -1.1859E+01 |
| focal length of fθ lens | ft | 213.7 | D2S | 1.2604E-03 | 4.9796E-04 |
| degree of convergence of collimator polygon - natural converging point | fc | 317.3 | D4S | 1.2255E-06 | -2.0734E-07 |
| | | | D6S | 8.4502E-10 | 2.3479E-10 |
| | | | D8S | -6.3449E-13 | -1.0939E-13 |
| | | | D10S | 1.3148E-15 | 1.5644E-17 |
| | | | D2E | 9.3936E-04 | 4.4938E-04 |
| | | | D4E | 2.027E-06 | -4.6627E-08 |
| | | | D6E | 7.0546E-10 | 1.1322E-10 |
| | | | D8E | -1.2936E-12 | -5.8704E-14 |
| | | | D10E | 2.3372E-15 | 4.3944E-18 |

Figure 5 is an illustration showing a change of curvature in the sub scanning direction relative to the position of the fθ lens 6 in the lengthwise direction. As shown in Figure 5, the curvature of the meniscus shape is sharp on the axis and becomes plano-convex from the on-axis toward the off-axis. Figure 6 is an illustration showing the aspherical surface shape of the fθ lens 6. In Figure 6, thick solid lines indicate the lens surface shapes in the main scanning direction, and thin solid lines are the loci of the principal plane in the sub scanning direction, and indicate the front side principal plane and the rear side principal plane.

In Embodiment 1, the curve amount dx of the locus of the principal plane for suppressing the change of lateral magnification in the sub scanning direction due to image height is

$$dx = 6.50$$

from

$$Ipri = 48.73 \qquad Epri = 108.77$$

$$\theta por = 44.4° \qquad \theta img = 29.10°.$$

Also, the curve amount xm of the locus of the front side principal plane of the fθ lens 6 in the sub scanning direction and the curve amount xu of the locus of the rear side principal plane thereof are

$$xm = 3.24 \qquad xu = 7.48$$

and these values satisfy the aforementioned conditional expression (1) ($xm \leq dx \leq xu$).

Thereby, in Embodiment 1, the lateral magnification in the sub scanning direction between the light deflector 5 and the surface 8 to be scanned can be uniformized on the axis and off the axis to a level free of any practical problem, and as shown in Figure 7, the change of the spot diameter in the sub scanning direction due to image height can be minimized. Thereby, there is achieved a scanning optical apparatus which is inexpensive and suitable for highly accurate printing.

Figures 8A and 8B are cross-sectional views of Embodiment 2 of the present invention in the main scanning direction and the sub scanning direction, respectively. In Figures 8A and 8B, the same elements as the elements shown in Figures 4A and 4B are given the same reference numerals.

The differences of Embodiment 2 from the aforedescribed Embodiment 1 are that the divergent beam of light emitted from the semiconductor laser (the light source unit) is converted not into a convergent beam of light but into a parallel beam of light by the collimator lens and that corresponding thereto, the lens shape of the fθ lens is made different. In the other points, the construction and optical action of Embodiment 2 are substantially similar to those of Embodiment 1, whereby a similar effect is obtained.

Table 2 below shows the optical arrangement in Embodiment 2 and the aspherical surface coefficients of an fθ lens 26.

Table 2 (Embodiment 2)

| | | | shape of fθ lens | | |
|---|---|---|---|---|---|
| wavelength used | λ(nm) | 780 | | 1st surface | 2nd surface |
| refractive index of fθ lens | n | 1.519 | R | 2.2000E+02 | -1.1768E+02 |
| angle of incidence on polygon | θi | -60 | K | 0.0000E+00 | 0.0000E+00 |
| maximum angle of emergence from polygon | θmax | 42 | B4 | -1.1899E-06 | -5.2353E-07 |
| polygon - fθ lens | e | 40 | B6 | 3.1847E-10 | -8.6171E-11 |
| center thickness of fθ lens | d | 15 | B8 | -2.9372E-14 | 1.8432E-14 |
| fθ lens - surface to be scanned | Sk | 146.45 | B10 | 3.2427E-19 | 8.4808E-18 |
| maximum effective diameter of fθ lens | Ymax | 43 | r | -1.1312E+02 | -1.7832E+01 |
| focal length of fθ lens | ft | 150 | d2S | -4.8301E-04 | 4.5963E-05 |
| | | | d4S | 1.8211E-07 | -7.1210E-08 |
| | | | d6S | -1.0230E-10 | 1.7390E-11 |
| | | | d8S | 7.2371E-14 | -4.3029E-15 |
| | | | d10S | -2.1962E-17 | -1.4545E-19 |
| | | | d2E | -7.0160E-04 | 1.1994E-05 |
| | | | d4E | 3.6411E-07 | -5.9970E-08 |
| | | | d6E | -1.0351E-11 | -1.7699E-12 |
| | | | d8E | -7.6585E-14 | 2.1846E-14 |
| | | | d10E | 2.0350E-17 | -9.2552E-18 |

Figure 9 is an illustration showing a change of curvature in the sub scanning direction relative to the position of the fθ lens 26 in the lengthwise direction. As shown in Figure 9, the curvature of the meniscus shape becomes sharper from the on-axis toward the off-axis. Figure 10 is an illustration showing the aspherical surface shape of the fθ lens 26. In Figure 10, thick solid lines indicate the lens surface shape in the main scanning direction, and thin solid lines are the loci of the principal plane in the sub scanning direction, and indicate the front side principal plane and the rear side principal plane.

In Embodiment 2, the curve amount dx of the locus of the principal plane for suppressing the change of lateral magnification in the sub scanning direction due to image height is

$$dx = 7.60$$

from

$$Ipri = 53.94 \qquad Epri = 147.51$$

$$\theta por = 42.0° \qquad \theta img = 24.57°.$$

Also, the curve amount xm of the locus of the front side principal plane of the fθ lens 26 in the sub scanning direction and the curve amount xu of the locus of the rear side principal plane thereof are

$$xm = 7.34 \qquad xu = 12.31$$

and these values satisfy the aforementioned conditional expression (1) ($xm \leq dex \leq xu$).

Thereby, in Embodiment 2, as in the aforedescribed embodiment 1, the lateral magnification in the sub scanning direction between the light deflector 25 and the surface 8 to be scanned can be uniformized on the axis and off the axis to a level free of any practical problem, and as shown in Figure 11, the change of the spot diameter in the sub scanning direction due to image height can be minimized. Thereby, there is achieved a scanning optical apparatus which is inexpensive and suitable for highly accurate printing.

In Embodiment 2, the divergent beam of light emitted from the semiconductor laser 1 is converted into a parallel beam of light by the collimator lens 2 as previously described and therefore, the jitter by the light deflector is null, and the lens shape, in the main scanning direction, of the lens surface R2 preponderantly creating the power in the sub scanning direction is similar to the shape of the locus of the principal plane for uniformizing the lateral magnification and therefore, the lateral magnification can be uniformized even if the change of curvature in the meridian-line direction due to image height is small, whereby there can be achieved a scanning optical apparatus suitable for further highly accurate printing.

Figures 12A and 12B are cross-sectional views of Embodiment 3 of the present invention in the main scanning direction and the sub scanning direction, respectively. In these figures, the same element as the elements shown in Figure 4 are given the same reference numerals.

The differences of Embodiment 3 from the aforedescribed Embodiment 1 are that the apparatus is comprised of a multibeam scanning optical system for scanning a plurality of beams of light emitted from light source means 11 having a plurality of (in Embodiment 3, too) light source units capable of being independently modulated, at a time, so as to have a predetermined interval therebetween on the surface to be scanned, and that correspondingly thereto, the lens shape of the fθ lens in the meridian-line direction (the sub scanning direction) is made different. In the other points, the construction and optical action of Embodiment 3 are substantially similar to those of the aforedescribed Embodiment 1, whereby a similar effect is obtained. The above-described plurality of light source units are disposed at a predetermined interval in the sub scanning direction.

Table 3 below shows the optical arrangement in Embodiment 3 and the aspherical surface coefficients of the fθ lens 36.

Table 3 (Embodiment 3)

| | | | | shape of fθ lens | |
|---|---|---|---|---|---|
| wavelength used | λ(nm) | 780 | | 1st surface | 2nd surface |
| refractive index of fθ lens | n | 1.519 | R | 6.7814E+01 | 1.6154E+02 |
| angle of incidence on polygon | θi | -90 | K | -1.6787E+01 | -1.0814E+02 |
| maximum angle of emergence from polygon | θmax | 45 | B4 | -9.8604E-07 | -2.2909E-06 |
| polygon - fθ lens | e | 36 | B6 | 1.5479E-11 | 7.1426E-10 |
| center thickness of fθ lens | d | 11 | B8 | 8.7055E-14 | -3.2030E-13 |
| fθ lens - surface to be scanned | Sk | 110.5 | B10 | -4.7942E-18 | 7.9836E-17 |
| maximum effective diameter of fθ lens | Ymax | 42 | r | -2.8363E+01 | -1.1966E+01 |
| focal length of fθ lens | ft | 213.7 | d2S | 5.4992E-05 | 4.4462E-05 |
| degree of convergence of collimator polygon - natural converging point | fc | 317.3 | d4S | -2.2581E-08 | -2.7866E-08 |
| | | | d6S | 9.5892E-12 | 2.5295E-11 |
| | | | d8S | -1.9648E-15 | -1.0163E-14 |
| | | | d10S | 2.7992E-19 | 1.9816E-18 |
| | | | d2E | 4.3102E-05 | 3.9194E-05 |
| | | | d4E | 1.7579E-08 | -1.2704E-08 |
| | | | d6E | -3.6419E-11 | 1.1605E-11 |
| | | | d8E | 2.1285E-14 | -3.3827E-15 |
| | | | d10E | -4.6427E-18 | 8.2100E-20 |

In Embodiment 3, the lens shape of at least one of the lens surfaces of the fθ lens 36 in the meridian-line direction is set so that the sign of curvature may be reversed from on the on-axis toward the off-axis. Therefore, the meridian-line direction of the fθ lens 36 corresponding to the sub scanning direction is represented by the following expression:

$$S=\frac{Z^2/r'}{1+(1-(Z/r')^2)^{1/2}}, \qquad \text{(e)}$$

where $r'=r+d_2Y^2+d_4Y^4+d_6Y^6+d_8Y^8+d_{10}Y^{10}$. Also, the generating-line direction corresponding to the main scanning direction is represented by expression (c) as in the aforedescribed Embodiment 1.

Figure 13 is an illustration showing a change of curvature in the sub scanning direction relative to the position of the fθ lens 36 in Embodiment 3 in the lengthwise direction. As shown in Figure 13, on the lens surface R1, the sign of curvature in the sub scanning direction is reversed from on the on-axis toward the off-axis, and the meniscus shape on the axis changes into a biconvex shape off the axis. Figure 14 is an illustration showing the aspherical surface shape of the fθ lens 36. In Figure 14, thick solid lines indicate the lens surface shape in the main scanning direction, and thin solid lines are the loci of the principal plane in the sub scanning direction, and indicate the front side principal plane and the rear side principal plane.

In Embodiment 3, the curve amount dx of the locus of the principal plane for suppressing the change of lateral magnification in the sub scanning direction due to image height is

$$dx = 6.50$$

from

$$Ppri = 48.73 \qquad Epri = 108.77$$

$$\theta por = 44.4° \qquad \theta img = 29.10°.$$

Also, the curve amount xm of the locus of the front side principal plane of the fθ lens 36 in the sub scanning direction and the curve amount xu of the locus of the rear side principal plane thereof are

$$xm = 4.93 \qquad xu = 9.10$$

and these values satisfy the aforementioned conditional expression (1) ($xm \le dx \le xu$).

Thus, in Embodiment 3, as in the aforedescribed Embodiments 1 and 2, the lateral magnification in the sub scanning direction between the light deflector 5 and the surface 8 to be scanned can be uniformized to a level free of any practical problem on the axis and off the axis, and the change of the spot diameter in the sub scanning direction due to image height can be minimized. Thereby, there is achieved a scanning optical apparatus which is inexpensive and suitable for highly accurate printing.

Also, Embodiment 3 is a multibeam scanning optical apparatus using a plurality of beams of light to scan the surface to be scanned at a time and therefore, the curve of the scanning line provides pitch irregularity on the image and this is not good.

So, in Embodiment 3, the radius of curvature in the sub scanning direction is continuously varied in the effective portion of the lens by image height, whereby the curve of the scanning line on the surface to be scanned can be eliminated as shown in Figure 15, and thus, there is achieved a scanning optical apparatus (multibeam scanning optical apparatus) of high image quality free of pitch irregularity.

Figures 16A and 16B are cross-sectional views of the essential portions of Embodiment 4 of the present invention in the main scanning direction and the sub scanning direction, respectively. In these figures, the same element as the elements shown in Figures 12A and 12B are given the same reference numerals.

In Figures 16A and 16B, reference numeral 46 designates an fθ lens (an imaging optical system) comprising a lens having the fθ characteristic as a third optical element, and this fθ lens 46 is disposed more toward the light deflector 5 than the intermediate portion between the light deflector 5 and the photosensitive drum surface 8 as the surface to be scanned.

In Embodiment 4, the opposite lens surfaces of the fθ lens 46 both have their curvatures in the sub scanning direction continuously varied from the on-axis fθ lens 46 both have their curvatures in the sub scanning direction continuously varied from the on-axis toward the off-axis. Thereby, in Embodiment 4, the change of F number in the sub scanning direction due to the image height of the beam of light incident on the surface to be scanned, i.e., the change of the spot diameter, is minimized. Also, the sign of the curvature of at least one (the first surface) R1 of the opposite lens surfaces of the fθ lens 46 in the sub scanning direction is reversed from the on-axis toward the off-axis. Further, the curvatures of the opposite lens surfaces of the fθ lens in the sub scanning direction are varied from the on-axis toward the off-axis so as to become asymmetrical with respect to the optical axis. The fθ lens 46 causes a plurality of beams of light based on image information deflected and reflected by the light deflector 5 to be imaged on the photosensitive drum surface 8 and corrects the plane inclination of the deflecting surface of the light deflector 5.

In Embodiment 4, the fθ lens 46 may be made by plastic molding or may be made by glass molding.

In Embodiment 4, two independently modulated divergent beams of light emitted from a semiconductor laser 11 are converted into convergent beams of light by the collimator lens 2, and these beams of light (the quantity of light) are limited by the aperture stop 3 and enter the cylindrical lens 4. The beams of light having entered the cylindrical lens 4, in the main scanning section, emerge therefrom intactly in that state. Also, in the sub scanning section, they converge and are imaged as substantially linear images (linear images long in the main scanning direction) on the deflecting surface 5a of the light deflector 5. The two beams of light deflected and reflected by the deflecting surface 5a of the light deflector 5 from two spots on the photosensitive drum surface 8 through the fθ lens 46 having different refractive powers in the main scanning direction and the sub scanning direction, and scan the photosensitive drum surface 8 in the direction of arrow B by the light deflector 5 being rotated in the direction of arrow A. Thereby, image recording is effected.

In Embodiment 4, the lens shape of the fθ lens 46, in the main scanning direction, is made into an aspherical surface shape capable of being represented by a function up to the 10th order in the main scanning direction and in the sub scanning direction, is comprised of a spherical surface continuously varying in the image height direction. That lens shape is such that the generating-line direction corresponding to the main scanning direction is indicated by the aforementioned expression (c) and the meridian-line direction corresponding to the sub scanning direction (the direction orthogonal to the main scanning direction containing the optical axis of the fθ lens) can be represented by

$$S=\frac{Z^2/r'}{1+(1-(Z/r')^2)^{1/2}}, \qquad (f)$$

(where $1/r'=1/r+D_2Y^2+D_4Y^4+D_6Y^6+D_8Y^8+D_{10}Y^{10}$).

Generally, in a multibeam scanning optical apparatus, to make pitch irregularity visually inconspicuous, it is desirable that the pitch irregularity due to the curve of the scanning line be 1/10 of the beam pitch in the sub scanning direction or less. For example, in the case of a scanning optical apparatus in which the resolution in the sub scanning direction is 600 dpi, the beam pitch in the sub scanning direction is 42 pm and therefore, allowable pitch irregularity is about 4 μm or less.

So, in Embodiment 4, when the maximum value and the minimum value of the F number of the beam of light incident on the surface to be scanned in the sub scanning direction are Fmax and Fmin, respectively, the curvatures of the opposite lens surfaces of the fθ lens 46 in the sub scanning direction are continuously varied from the on-axis toward the off-axis so as to satisfy the condition that

$$Fmin/Fmax \geq 0.9, \qquad (2)$$

whereby the curve of the scanning line can be eliminated to thereby achieve a multibeam scanning optical apparatus which suffers little from pitch irregularity and is high in image quality and compact.

If the above-mentioned condition is departed from, pitch irregularity will become visually conspicuous due to the curve of the scanning line and this will pose a problem in practice.

Table 4 below shows the optical arrangement in Embodiment 4 and the aspherical surface coefficients of the fθ lens 46.

Table 4 (Embodiment 4)

| Design Data | | | | shape of fθ lens | |
|---|---|---|---|---|---|
| | | | | 1st surface | 2nd surface |
| wavelength used | λ(nm) | 780 | R | 6.7814E+01 | 1.6154E+02 |
| refractive index of fθ lens | n | 1.519 | K | -1.6787E+01 | -1.0814E+02 |
| angle of incidence on polygon | θi | -90 | B4 | -9.8604E-07 | -2.2909E-06 |
| maximum angle of emergence from polygon | θmax | 45 | B6 | 1.5479E-11 | 7.1426E-10 |
| polygon - fθ lens | e | 36 | B8 | 8.7055E-14 | -3.2030E-13 |
| center thickness of fθ lens | d | 11 | B10 | -4.7942E-18 | 7.9836E-17 |
| fθ lens - surface to be scanned | Sk | 110.5 | r | -2.8363E+01 | -1.1966E+01 |
| maximum effective diameter of fθ lens | Ymax | 42 | D2S | 5.4992E-05 | 4.4462E-05 |
| focal length of fθ lens | ft | 213.7 | D4S | -2.2581E-08 | -2.7866E-08 |
| degree of convergence of collimator<br>polygon - natural converging point | fc | 317.3 | D6S | 9.5892E-12 | 2.5295E-11 |
| | | | D8S | -1.9648E-15 | -1.0163E-14 |
| polygon | circumscribed circle ϕ20 4 surfaces | | D10S | 2.7992E-19 | 1.9816E-18 |
| | | | D2E | 4.3102E-05 | 3.9194E-05 |
| | | | D4E | 1.7579E-08 | -1.2704E-08 |
| | | | D6E | -3.6419E-11 | 1.1605E-11 |
| | | | D8E | 2.1285E-14 | -3.3827E-15 |
| | | | D10E | -4.6427E-18 | 8.2100E-20 |

Figure 17 is an illustration showing a change of F number in the sub scanning direction on the surface to be scanned in Embodiment 4. In Embodiment 4, the curvatures of the fθ lens 46 in the sub scanning direction are continuously varied on the opposite lens surfaces from the on-axis toward the off-axis as shown in Figure 18 to thereby suppress the rate of change of F number due to image height so as to be

$$Fmin/Fmax = 64.52/66.31 = 0.973,$$

i.e., 0.9 or greater.

Figure 19 is an illustration showing the curve of the scanning line when the multibeam scanning optical apparatus of Embodiment 4 is used at resolution 600 dpi (scanning line interval 42.3μm). By suppressing the change of F number due to image height as described above, the curve of the scanning line can be brought to a level of the order of 0.2μm (pitch irregularity being of the order of μm) which is quite free of a practical problem.

Thus, in Embodiment 4, as described above, conditional expression (2) is satisfied and yet the curvatures of the fθ lens 46 in the sub scanning direction (the meridian-line direction) are continuously varied from the on-axis toward the off-axis to thereby suppress the change of F number in the sub scanning direction due to image height, i.e., the change of the spot diameter, to below a predetermined amount (within the allowable value of the apparatus) and eliminate the pitch irregularity due to the curve of the scanning line which poses a problem in the multibeam scanning optical apparatus. Also, in Embodiment 4, the third optical element (fθ lens) 46 is comprised of a single lens and therefore, there can be achieved a compact and low-cost multibeam scanning optical apparatus.

Figures 20A and 20B are cross-sectional views of the essential portions of Embodiment 5 of the present invention in the main scanning direction and the sub scanning direction, respectively. In these figures, the same elements as the elements shown in Figures 12A and 12B are given the same reference numerals.

The differences of Embodiment 5 from the aforedescribed Embodiment 4 are that in order to make curvature of image field in the main scanning direction small so as to be capable of coping with further highly accurate printing, the curvatures of the opposite lens surfaces of an fθ lens 56 in the generating-line direction are set so as to be asymmetrical with the optical axis, and that the number of the polygon surfaces of the polygon mirror 15 is changed from four to six to thereby cope with high-speed printing. In the other points, the construction and optical action of Embodiment 5 are substantially similar to those of Embodiment 4, whereby a similar effect is obtained.

Table 5 below shows the optical arrangement in Embodiment 5 and the aspherical surface coefficients of the fθ lens 56.

Table 5 (Embodiment 5)

| Design Data | | | | shape of fθ lens | |
|---|---|---|---|---|---|
| | | | | 1st surface | 2nd surface |
| wavelength used | λ(nm) | 780 | R | 7.6014E+01 | 1.8577E+02 |
| refractive index of fθ lens | n | 1.524 | K | -1.4188E+01 | -9.3624E+01 |
| angle of incidence on polygon | θi | -60 | B4S | -8.8268E-07 | -1.6683E-06 |
| maximum angle of emergence from polygon | θmax | 41.0 | B6S | 8.8566E-11 | 3.5647E-10 |
| polygon - fθ lens | e | 41.1 | B8S | 4.0586E-14 | -1.2120E-13 |
| center thickness of fθ lens | d | 10.4 | B10S | -5.2861E-19 | 3.5062E-17 |
| fθ lens - surface to be scanned | Sk | 122.5 | B4E | -8.8268E-07 | -1.6683E-06 |
| maximum effective diameter of fθ lens | Ymax | 42 | B6E | 5.2038E-11 | 3.5647E-10 |
| focal length of fθ lens | ft | 237.7 | B8E | 6.4399E-14 | -1.2120E-13 |
| degree of convergence of collimator | | | B10E | -5.1518E-18 | 3.5062E-17 |
| polygon - natural converging point | fc | 339.69 | r | -3.0459E+01 | -1.3017E+01 |
| polygon | circumscribed circle φ40 6 surfaces | | D2S | -3.2380E-05 | -1.4111E-06 |
| | | | D4S | 7.6080E-08 | 1.0715E-09 |
| | | | D6S | -3.4870E-11 | 1.7648E-11 |
| | | | D8S | 5.0570E-15 | -8.2750E-15 |
| | | | D10S | 0.0000E+00 | 1.0082E-18 |
| | | | D2E | -3.5200E-05 | -1.4111E-06 |
| | | | D4E | 8.0516E-08 | 1.0715E-09 |
| | | | D6E | -3.8015E-11 | 1.7648E-11 |
| | | | D8E | 6.0665E-15 | -8.2750E-15 |
| | | | D10E | -1.1908E-19 | 1.0082E-18 |

Figure 21 is an illustration showing a change of F number in the sub scanning direction on the surface to be scanned in Embodiment 5. In Embodiment 5, the curvatures of the fθ lens 56 in the sub scanning direction are continuously varied on the opposite lens surfaces from the on-axis toward the off-axis as shown in Figure 22, to thereby suppress the rate of change of F number due to image height so as to be

$$Fmin/Fmax = 49.75/53.08 = 0.937,$$

i.e., 0.9 or greater.

Figure 23 is an illustration showing the curve of the scanning line when the multibeam scanning optical apparatus of Embodiment 5 is used at resolution 600 dpi (the scanning line interval 42.3μm). By suppressing the change of F number due to image height as described above, the curve of the scanning line can be brought to a level of the order of 1.2μm (the pitch irregularity being of the order of 2.4μm) quite free of a practical problem.

Thus, again in Embodiment 5, as in Embodiment 4, conditional expression (2) is satisfied and yet the curvatures of the opposite lens surfaces of the fθ lens 56 in the sub scanning direction (the meridian-line direction) are continuously varied from the on-axis toward the off-axis to thereby suppress the change of F number in the sub scanning direction due to image height, i.e., the change of the spot diameter, to below a predetermined amount, and eliminate the pitch irregularity due to the curve of the scanning line which poses a problem in the multibeam scanning optical apparatus. Also, in Embodiment 5, the curvatures of the opposite lens surfaces of the fθ lens (the third optical element) 56 in the generating-line direction are set so as to be asymmetrical with respect to the optical axis to thereby suppress the curvature of image field in the main scanning direction and achieve a multibeam scanning optical apparatus suitable for further highly accurate printing.

Figures 24A and 24B are cross-sectional views of the essential portions of Embodiment 6 of the present invention in the main scanning direction and the sub scanning direction, respectively. In these figures, the same element as the elements shown in Figures 12A and 12B are given the same reference numerals.

The differences of Embodiment 6 from the aforedescribed Embodiment 4 are that an fθ lens (the third optical element) 76 is comprised of two lenses and the pitch irregularity due to the curve of the scanning line is reduced at higher accuracy, that the beam of light from a semiconductor laser 11 having a plurality of light emitting portions capable of being independently modulated is converted into a substantially parallel beam of light by the collimator lens 2, and that the number of the polygon surfaces of the polygon mirror 15 is changed from four to six to thereby cope with high-speed printing. In the other points, the construction and optical action of Embodiment 6 are substantially similar to those of the aforedescribed Embodiment 4, whereby a similar effect is obtained.

That is, in Figures 24A and 24B, reference numeral 76 designates an fθ lens as a third optical element, which comprises two lenses, i.e., a spherical lens (glass spherical lens) 76a as a first fθ lens formed of a glass material, and a toric lens (aspherical plastic toric lens) 76b as a second fθ lens of an aspherical surface shape formed of a plastic material. The glass spherical lens 76a is disposed more toward the light deflector 15 than the intermediate portion between the light deflector 15 and the photosensitive drum surface 8 and has the function of correcting chiefly the fθ characteristic. The aspherical plastic toric lens 76b effects chiefly the correction of curvature of image field and the correction of lateral magnification in the sub scanning direction.

In Embodiment 6, the curvatures, in the meridian-line direction (the sub scanning direction), of the opposite lens surfaces of the aspherical plastic toric lens 76b bearing almost all of the refractive power in the sub scanning direction are continuously varied from the on-axis toward the off-axis to thereby suppress the change of F number in the sub scanning direction on the surface to be scanned, i.e., the change of the spot diameter.

Table 6 below shows the optical arrangement in Embodiment 6 and the aspherical surface coefficients of the fθ lens (spherical lens 76a and toric lens 76b) 76.

Table 6 (Embodiment 6)

| Design Data | | | | shape of 1st fθ lens | |
|---|---|---|---|---|---|
| | | | | 1st surface | 2nd surface |
| wavelength used | λ(nm) | 780 | R | ∞ | -1.2042E+02 |
| refractive index of 1st fθ lens | n1 | 1.786 | r | ∞ | -1.2042E+02 |
| refractive index of 2nd fθ lens | n2 | 1.572 | | shape of 2nd fθ lens | |
| angle of incidence on polygon | θi | 65 | | 1st surface | 2nd surface |
| maximum angle of emergence from polygon | θmax | 45 | R | -8.7734E+02 | -3.4387E+02 |
| polygon - 1st fθ lens | e1 | 25.28 | K | 0.0000E+00 | 0.0000E+00 |
| center thickness of 1st fθ lens | d1 | 14.00 | B4 | -1.5203E-08 | 6.2830E-0.8 |
| focal length of 1st to 2nd fθ lens | e2 | 17.60 | B6 | -1.2062E-11 | -1.5527E-11 |
| center thickness of 2nd fθ lens | d2 | 5.10 | r | -1.2218E+01 | -9.9688E+00 |
| fθ lens - surface to be scanned | Sk | 116.13 | D2S | -4.2145E-07 | 4.2877E-07 |
| maximum effective diameter of fθ lens | Ymax | 50 | D4S | 1.3072E-10 | -7.9350E-10 |
| focal length of fθ lens | ft | 136 | D6S | 6.7762E-13 | 7.0965E-13 |
| polygon | circumscribed circle ϕ40 6 surfaces | | D2E | 2.2156E-07 | 1.2975E-07 |
| | | | D4E | 1.2193E-11 | -2.2874E-10 |
| | | | D6E | 4.9138E-13 | 4.3863E-13 |

Figure 25 is an illustration showing a change of F number in the sub scanning direction on the surface to be scanned in Embodiment 6. In Embodiment 6, the curvatures of the toric lens 76b in the sub scanning direction are continuously varied on the opposite lens surfaces thereof from the on-axis toward the off-axis as shown in Figure 26 to thereby suppress the rate of change of F number due to image height so as to be

$$Fmin/Fmax = 72.67/73.75 = 0.985,$$

i.e., 0.9 or greater.

Figure 27 is an illustration showing the curve of the scanning line when the multibeam scanning optical apparatus of Embodiment 6 is used at resolution 600 dpi (scanning line interval 42.3μm). By suppressing the change of F number due to image height, the curve of the scanning line can be brought to a level of the order of 0.1μm (pitch irregularity being of the order of 0.2μm) free of a practical problem.

Thus, again in Embodiment 6, as in the aforedescribed Embodiment 4, conditional expression (2) is satisfied and yet the curvatures of the opposite lens surfaces of the toric lens 76b constituting the fθ lens 76 in the sub scanning direction (the meridian-line direction) are continuously varied from the on-axis toward the off-axis to thereby suppress the change of F number in the sub scanning direction due to height, i.e., the change of the spot diameter, to below a predetermined amount and eliminate the pitch irregularity due to the curve of the scanning line which poses a problem in the multibeam scanning optical apparatus. Also, in Embodiment 6, by the fθ lens (the third optical element) 76 being comprised of two lenses, the curve of the scanning line can be corrected more highly accurately, and there is achieved a multibeam scanning optical apparatus suitable for further highly accurate printing.

The sign of the curvature of at least one of the two lenses constituting the third optical element in the sub scanning direction may be reversed from the on-axis toward the off-axis, and the curvatures of at least two lens surfaces of the two lenses in the sub scanning direction may be varied asymmetrically with respect to the optical axis from the on-axis toward the off-axis. Thereby, there can be achieved a multibeam scanning optical apparatus more suitable for highly accurate printing.

Lastly, for the comparison with the scanning optical apparatus of the present invention, description will be made of the manner in which multibeam scanning was effected by the prior-art single beam scanning optical apparatus shown in Figures 2A and 2B.

Figures 28A and 28B are cross-sectional views of the essential portions in the main scanning direction and the sub scanning direction, respectively, when multibeam scanning was effected by the use of the prior-art single beam scanning optical apparatus shown in Figures 2A and 2B, and show the changes of the angular magnification in the sub scanning direction and the spot diameter (F number) in the sub scanning direction on the surface to be scanned, due to image height. Table 7 below shows the optical arrangement shown in Figures 28A and 28B and the aspherical surface coefficients of an fθ lens 86.

Table 7

| Design Data | | | | shape of fθ lens | |
|---|---|---|---|---|---|
| | | | | 1st surface | 2nd surface |
| wavelength used | λ(nm) | 780 | R | 6.7814E+01 | 1.6154E+02 |
| refractive index of fθ lens | n | 1.519 | K | -1.6787E+01 | -1.0814E+02 |
| angle of incidence on polygon | θi | -90 | B4 | -9.8604E-07 | -2.2909E-06 |
| maximum angle of emergence from polygon | θmax | 45 | B6 | 1.5479E-11 | 7.1426E-10 |
| polygon - fθ lens | e | 36 | B8 | 8.7055E-14 | -3.2030E-13 |
| center thickness of fθ lens | d | 11 | B10 | -4.7942E-18 | 7.9836E-17 |
| fθ lens - surface to be scanned | Sk | 110.5 | r | -2.8531E+01 | -1.1991E+01 |
| maximum effective diameter of fθ lens | Ymax | 42 | D2S | 0.0000E+00 | 2.1635E-05 |
| focal length of fθ lens | ft | 213.7 | D4S | 0.0000E+00 | -3.6548E-08 |
| degree of convergence of collimator | | | D6S | 0.0000E+00 | 2.7926E-11 |
| polygon - natural converging point | fc | 317.3 | D8S | 0.0000E+00 | -1.1184E-14 |
| polygon | circumscribed circle ϕ20 4 surfaces | | D10S | 0.0000E+00 | 1.7618E-18 |
| | | | D2E | 0.0000E+00 | 2.2817E-05 |
| | | | D4E | 0.0000E+00 | -3.8012E-08 |
| | | | D6E | 0.0000E+00 | 2.9368E-11 |
| | | | D8E | 0.0000E+00 | -1.2060E-14 |
| | | | D10E | 0.0000E+00 | 1.9700E-18 |

In Figures 28A and 28B, two in dependently modulated divergent beams of light emitted from light source means 81 are converted into convergent beams of light by a collimator lens 82, and these beams of light (the quantity of light) are limited by a stop 83 and enter a cylindrical lens 84 having predetermined refractive power. The beams of light having entered the cylindrical lens 84, in the main scanning plane, intactly emerge in that state. Also, in the sub scanning section, they converge and are imaged as substantially linear images on the deflecting surface (reflecting surface) 85a of a light deflector 85 comprising a rotatable polygon mirror. The two beams of light deflected and reflected by the deflecting surface 85a of the light deflector 85 are directed onto a photosensitive drum surface as a surface 88 to be scanned through an imaging optical system (fθ lens) 86 having the fθ characteristic, and the light deflector 85 is rotated in the direction of arrow A, whereby the photosensitive drum surface 88 is light-scanned to thereby effect the recording of image information.

Usually, in a plane inclination correcting optical system, as previously described, it is necessary to bring the deflecting surface of the light deflector and the surface to be scanned into optically conjugate relationship (imaging relationship) with each other in order to optically correct the plane inclination of the deflecting surface. In the comparative example shown in Figures 28A and 28B, with the curvature in the sub scanning direction (meridian line curvature) of that lens surface (first surface) R1 of the fθ lens 86 which is adjacent to the light deflector 85 being constant, the curvature in the sub scanning direction (meridian line curvature) of that lens surface (second surface) R2 of the fθ lens 86 which is adjacent to the surface to be scanned is continuously varied from the on-axis toward the off-axis to thereby bring about conjugate relationship at any image height.

However, the fθ lens 86 in the above-described comparative example is constant in the meridian line curvature of one surface (surface R1) thereof as shown in Figure 30 and therefore, as shown in Figure 29, depending on the bus line shape thereof, F number (F No) becomes irregular due to image height. That is, on the axis (the on-axis beam), the F number in the sub scanning direction on the surface to be scanned is great as shown in (1) in Figure 28B and therefore, the angular magnification in the sub scanning direction is small, and off the axis (the off-axis beam), the F number in the sub scanning direction is small as shown in (2) in Figure 28B and therefore, the angular magnification is great (there is a converse case depending on the main scanning plane shape).

Generally, between the angular magnification $\gamma$ and the lateral magnification $\beta$, the relation that

$$\beta\gamma = -1$$

is established and therefore, in the above-described comparative example, the lateral magnification becomes great on the axis and the lateral magnification becomes small off the axis. Therefore, due to image height, irregularity is created in the lateral magnification in the sub scanning direction, and in an optical system like a multibeam scanning optical apparatus which uses a plurality of laser beams off the optical axis to scan, the scanning line makes a curve on the surface to be scanned.

Figure 31 is an illustration showing the curve of the scanning line when the multibeam scanning optical apparatus of the comparative example is used at resolution 600 dpi (scanning line interval 42.3μm). In Figure 31, the scanning line in the marginal portion is curved by 2.4μm with respect to the central portion, and this leads to the problem that pitch irregularity of 4.8μm will result and deteriorate the quality of image.

The above-noted problem does not arise in the scanning optical apparatus of the present invention, and according to a first invention, there can be achieved a compact scanning optical apparatus suitable for highly accurate printing in which when as previously described, a beam of light from a light source converted by a collimator lens or the like is to be imaged on a surface to be scanned by an fθ lens through a light deflector, curvature of image field, distortion, etc. are well corrected by optimizing the lens shape of the fθ lens and the non-uniformity of the lateral magnification in the sub scanning direction between the light deflector and the surface to be scanned can be eliminated to thereby suppress the change of F number in the sub scanning direction due to image height, i.e., the change of the spot diameter.

Also, according to a second aspect of the invention, there can be achieved a multibeam scanning optical apparatus in which when as previously described, a plurality of beams of light from a light source converted by a collimator lens or the like are to be imaged on a surface to be scanned by an fθ lens through a light deflector, curvature of image field, distortion, etc. are well corrected by optimizing the lens shape of the fθ lens and the non-uniformity of the lateral magnification in the sub scanning direction between the light deflector and the surface to be scanned can be eliminated to thereby suppress the change of F number in the sub scanning direction due to image height, i.e., the change of the spot diameter, and reduce the pitch irregularity due to the curve of the scanning line.

Further, there can be achieved a multibeam scanning optical apparatus in which the curvature of the fθ lens in the sub scanning direction is determined so as to satisfy the aforementioned conditional expression (2), whereby pitch irregularity can be reduced to a visually problem-free level.

## Claims

1. A scanning optical apparatus comprising:

light source means (1; 11) for emitting a divergent beam;

**characterized by**:

a deflecting element (5; 15) for deflecting a beam of light emitted from said light source means;
optical means including a first optical element (2) for converting the divergent beam into a parallel beam and a second optical element (4) for forming an image of said light source means on the deflecting surface of said deflecting element (5; 15) as a linear shape spot elongated in the main scanning direction;
a third optical element (6; 26; 36; 46; 56; 76; 86) for causing the beam of light deflected by said deflecting element (5; 15) to be imaged into a spot-like shape on a surface to be scanned (8), said third optical element comprising a single lens, the opposing lens surfaces (R1, R2) of the third optical element having toric power and comprising a non-circular cross-section in the main scanning plane, and the curvature of said opposite lens surfaces (R1, R2) in the sub scanning plane being continuously varied from the on-axis toward the off-axis in the effective portion of the lens such as to provide a substantially constant image magnification in the sub scanning direction over the effective portion of the lens.

2. A scanning optical apparatus according to claim 1, wherein the following condition is satisfied:

$$xm \leq dx \leq xu,$$

where xm represents the difference in the optical axis direction between the position of the most off-axis front side principal plane and the position of the on-axis front side principal plane in a locus, on the main scanning section, of the front side principal plane in the sub scanning direction of said third optical element;

xu represents a difference in the optical axis direction between a position of the most off-axis backside principal plane and a position of the on-axis backside principal plane in a locus, on the main scanning section, of the rear side principal plane in the sub scanning direction of said third optical element; and

$$dx=\frac{Ipri\text{-}Epri(\cos\theta img - \cos\theta por)}{Ipri\text{-}\cos\theta por + Epri\text{-}\cos\theta img}$$

where Ipri represents the distance along the on-axis beam from the deflecting surface of the deflecting element to the front side principal plane in the sub scanning direction of said third optical element;

Epri represents the distance along the on-axis beam from the rear side principal plane in the sub scanning direction of said third optical element to the surface tb be scanned;

θpor represents the angle formed, on the main scanning section, by the most off-axis beam deflected by the deflecting element with respect to the optical axis; and

θimg represents the angle formed, on the main scanning section, by the most off-axis beam incident on the surface to be scanned with respect to the optical axis.

3. A scanning optical apparatus according to either of claims 1 and 2, wherein said light source (11) has a plurality of light emitting portions effective to emit a plurality of light beams which are independently modulatable.

4. A scanning optical apparatus according to claim 3, wherein the following condition is satisfied:

$$Fmin / Fmax \geq 0.9,$$

where Fmax and Fmin represent, respectively, the maximum value and minimum value of the F number, in the sub-scanning direction, of the beam of light incident on said surface (8) to be scanned.

5. A scanning optical apparatus according to any one of claims 1 to 4, wherein the sign of the curvature of at least one of said lens surface (R1, R2) in the sub-scanning direction changes on the way from the on-axis toward the off-axis.

**6.** A scanning optical apparatus according to any one of the preceding claims, wherein the or at least one lens of said third optical element is produced by glass molding.

**7.** A scanning optical apparatus according to any one of claims 1 to 6, wherein the or at least one lens of said third optical element is produced by plastic molding.

**8.** A scanning optical apparatus according to any one of claims 1 to 7, wherein said light source (1; 11) comprise a semiconductor laser.

**9.** A scanning optical apparatus according to any one of claims 1 to 8, wherein said first optical element comprises a collimator lens (2) arranged to collimate the light beam emitted from said light source (1) and a cylindrical lens (4) arranged to form the linear image elongated in the main scanning direction from the parallel beam transmitted through the collimator lens (2).

**10.** A scanning optical apparatus according to claim 9, including an aperture stop (3) between said collimator lens (2) and said cylindrical lens (4).

**11.** A scanning optical apparatus according to any one of claims 1 to 10, wherein said deflecting element (5; 15) comprises a polygon mirror.

**12.** A scanning optical apparatus according to,claim 1, wherein the entrance lens surface of said third optical element has a cross-section taken on the sub-scanning direction which is concave at the on-axis and convex at either end of the effective portion.

**13.** A laser beam printer incorporating a scanning optical apparatus according to any one of claims 1 to 11, wherein said surface (8) to be scanned is a photosensitive surface.

**Patentansprüche**

**1.** Optische Abtastvorrichtung mit:

Lichtquellenmittel (1; 11) zum Emittieren eines divergenten Strahlenbündels;

**gekennzeichnet durch**:

ein Ablenkungselement (5; 15) zum Ablenken eines von dem Lichtquellenmittel emittierten Lichtstrahlenbündels;

optische Mittel einschließlich eines ersten optischen Elements (2) zur Umwandlung des divergenten Strahlenbündels in ein paralleles Strahlenbündel und eines zweiten optischen Elements (4) zum Erzeugen eines Bilds des Lichtquellenmittels auf der ablenkenden Oberfläche des Ablenkungselements (5; 15) als ein in der Hauptabtastrichtung erstreckter linear geformter Fleck;

ein drittes optisches Element (6; 26; 36; 46; 56; 76; 86) um zu bewirken, daß das von dem Ablehkungselement (5; 15) abgelenkte Lichtstrahlenbündel in einer punktähnlichen Form auf einer abzutastenden Oberfläche (8) abgebildet wird, wobei das dritte optische Element eine einzelne Linse aufweist, die gegenüberliegenden Linsenoberflächen (R1, R2) des dritten optischen Elements eine torische Brechkraft aufweisen und einen nichtkreisförmigen Querschnitt in der Hauptabtast-Ebene aufweisen, und die Krümmung der gegenüberliegenden Linsenoberflächen (R1, R2) in der Nebenabtastebene kontinuierlich von der Achse hin zur Achsferne in dem effektiven Abschnitt der Linse sich verändert, wie um eine im wesentlichen konstante Bildvergrößerung in der Nebenabtastrichtung über dem effektiven Abschnitt der Linse vorzusehen.

**2.** Optische Abtastvorrichtung nach Anspruch 1, wobei die folgende Bedingung erfüllt ist:

$$xm \leq dx \leq xu,$$

wobei xm die Differenz in der optischen Achsenrichtung zwischen der Position der achsfernsten Stirnseiten-Hauptebene und der Position der axialen Stirnseiten-Hauptebene in einem Ort, auf dem Hauptabtast-Teilabschnitt, der Stirnseiten-Hauptebene in der Nebenabtastrichtung des dritten optischen Elements darstellt;
xu eine Differenz in der optischen Achsenrichtung zwischen einer Position der achsfernsten Rückseiten-Hauptebene und einer Position der axialen Rückseiten-Hauptebene in einem Ort, auf dem Hauptabtast-Teilabschnitt, der Rückseiten-Hauptebene in der Nebenabtastrichtung des dritten optischen Elements darstellt, und

$$dx = \frac{Ipri\text{-}Epri(\cos\theta img\text{-}\cos\theta por)}{Ipri\text{-}\cos\theta por\text{+}Epri\text{-}\cos\theta img}$$

wobei Ipri den Abstand entlang des axialen Strahlenbündals von der ablenkenden Oberfläche des Ablenkungselements zu der Stirnseiten-Hauptebene in der Nebenabtastrichtung des dritten optischen Elements darstellt;
Epri den Abstand entlang des axialen Strahlenbündels von der Rückseiten-Hauptebene in der Nebenabtastrichtung des dritten optischen Elements zu der abzutastenden Oberfläche darstellt; θpor den Winkel darstellt, der auf dem Hauptabtast-Teilabschnitt von dem achsfernsten Strahlenbündel, das von dem Ablenkungselement abgelenkt wird, bezüglich der optischen Achse gebildet wird;
und
θimg den Winkel darstellt, der auf dem Hauptabtast-Teilabschnitt von dem achsfernsten Strahlenbündel, das auf die abzutastende Oberfläche einfällt, bezüglich der optischen Achse gebildet wird.

**3.** Optische Abtastvorrichtung nach Anspruch 1 oder 2, wobei die Lichtquelle (11) eine Vielzahl von lichtemittierenden Abschnitten aufweist, die wirksam sind, um eine Vielzahl von Lichtstrahlenbündeln zu emittieren, die unabhängig modulierbar sind.

**4.** Optische Abtastvorrichtung nach Anspruch 3, wobei die folgende Bedingung erfüllt ist:

$$Fmin/\ Fmax \geq 0.9,$$

wobei Fmax und Fmin jeweils den Maximalwert und Minimalwert der F-Zahl, in der Nebenabtastrichtung, des auf die abzutastende Oberfläche (8) einfallenden Lichtstrahlenbündels darstellen.

**5.** Optische Abtastvorrichtung nach einem der Ansprüche 1 bis 4, wobei das Vorzeichen der Krümmung von zumindest einer der Linsenoberflächen (R1, R2) in der Nebenabtastrichtung sich auf dem Weg von der Achse zur Achsferne hin ändert.

**6.** Optische Abtastvorrichtung nach einem der vorhergehenden Ansprüche, wobei die oder zumindest eine Linse des dritten optischen Elements durch Glasformguß hergestellt ist.

**7.** Optische Abtastvorrichtung nach einem der Ansprüche 1 bis 6, wobei die oder zumindest eine Linse des dritten optischen Elements durch Kunststoff-Formguß hergestellt ist.

**8.** Optische Abtastvorrichtung nach einem der Ansprüche 1 bis 7, wobei die Lichtquelle (1; 11) einen Halbleiterlaser aufweist.

**9.** Optische Abtastvorrichtung nach einem der Ansprüche 1 bis 8, wobei das erste optische Element eine Kollimatorlinse (2), welche zum Kollimieren des von der Lichtquelle (1) emittierten Lichtstrahlenbündels angeordnet ist, und eine zylindrische Linse (4) aufweist, die zum Erzeugen des in der Hauptabtastrichtung von dem durch die Kollimatorlinse (2) durchgelassenen parallelen Lichtstrahlenbündel erstreckten linearen Bilds angeordnet ist.

**10.** Optische Abtastvorrichtung nach Anspruch 9, einschließlich einer Aperturblende (3) zwischen der Kollimatorlinse (2) und der zylindrischen Linse (4).

**11.** Optische Abtastvorrichtung nach einem der Ansprüche 1 bis 10, wobei das Ablenkungselement (5; 15) einen Polygonspiegel aufweist.

**12.** Optische Abtastvorrichtung nach Anspruch 1, wobei die Eintrittslinsenoberfläche des dritten optischen Elements einen auf der Nebenabtastrichtung verlaufenden Querschnitt aufweist, welcher konkav auf der Achse und konvex an jedem Ende des effektiven Abschnitts ist.

**13.** Laserstrahldrucker umfassend eine optische Abtastvorrichtung nach einem der Ansprüche 1 bis 11, wobei die abzutastende Oberfläche (8) eine photoempfindliche Oberfläche ist.

## Revendications

**1.** Appareil optique à balayage comportant :

un moyen (1 ; 11) à source de lumière destiné à émettre un faisceau divergent ;

**caractérisé par** :

un élément de déviation (5 ; 15) destiné à dévier un faisceau de lumière émis depuis ledit moyen à source de lumière ;
un moyen optique comprenant un premier élément optique (2) destiné à convertir le faisceau divergent en un faisceau parallèle et un second élément optique (4) destiné à former une image dudit moyen à source de lumière sur la surface de déviation dudit élément de déviation (5 ; 15) en tant que spot de forme linéaire allongé dans la direction de balayage principal ;
un troisième élément optique (6 ; 26 ; 36 ; 46 ; 56 ; 76 ; 86) destiné à amener le faisceau de lumière dévié par ledit élément de déviation (5 ; 15) à être formé en une image d'une forme analogue à un spot sur une surface (8) devant être balayée, ledit troisième élément optique comportant une lentille unique, les surfaces opposées (R1, R2) de la lentille du troisième élément optique ayant une puissance torique et présentant une section transversale non circulaire dans le plan de balayage principal, et la courbure desdites surfaces opposées (R1, R2) de la lentille dans le plan de balayage secondaire variant en continu de la position sur l'axe vers la position hors d'axe dans la partie effective de la lentille de façon à produire un agrandissement d'image sensiblement constant dans la direction de balayage secondaire sur la partie effective de la lentille.

**2.** Appareil optique à balayage selon la revendication 1, dans lequel la condition suivante est satisfaite :

$$xm \leq dx \leq xu,$$

où xm représente la différence, dans la direction de l'axe optique, entre la position du plan principal du côté avant le plus hors d'axe et la position du plan principal du côté avant sur l'axe dans un lieu géométrique, sur la section de balayage principal, du plan principal du côté avant dans la direction de balayage secondaire dudit troisième élément optique ;

xu représente une différence dans la direction de l'axe optique entre une position du plan principal du côté arrière le plus hors d'axe et une position du plan principal du côté arrière sur l'axe dans un lieu géométrique, sur la section de balayage principal, du plan principal du côté arrière dans la direction de balayage secondaire dudit troisième élément optique, et

$$dx = \frac{Ipri.Epri\ (\cos\theta img - \cos\theta por)}{Ipri \cdot \cos\theta por + Epri \cdot \cos\theta img}$$

où Ipri représente la distance le long du faisceau sur l'axe depuis la surface de déviation de l'élément de déviation jusqu'au plan principal du côté avant dans la direction de balayage secondaire dudit troisième élément optique ;

Epri représente la distance le long du faisceau sur l'axe depuis le plan principal du côté arrière dans la direction de balayage secondaire dudit troisième élément optique jusqu'à la surface devant être balayée ;

θpor représente l'angle formé, sur la section de balayage principal, par le faisceau le plus hors d'axe dévié par l'élément de déviation par rapport à l'axe optique ; et

θimg représente l'angle formé, sur la section de balayage principal, par le faisceau incident le plus hors d'axe sur la surface devant être déviée par rapport à l'axe optique.

**3.** Appareil optique à balayage selon l'une des revendications 1 et 2, dans lequel ladite source de lumière (11) comporte une pluralité de parties d'émission de lumière ayant pour effet d'émettre une pluralité de faisceaux lumineux qui peuvent être modulés de façon indépendante.

4. Appareil optique à balayage selon la revendication 3, dans lequel la condition suivante est satisfaite :

$$Fmin / Fmax > 0,9$$

où Fmax et Fmin représentent, respectivement, la valeur maximale et la valeur minimale du nombre F, dans la direction de balayage secondaire, du faisceau de lumière tombant sur ladite surface (8) devant être balayée.

5. Appareil optique à balayage selon l'une quelconque des revendications 1 à 4, dans lequel le signe de la courbure d'au moins l'une desdites surfaces (R1, R2) de lentille dans la direction de balayage secondaire change en allant de la position sur l'axe vers la position hors d'axe.

6. Appareil optique à balayage selon l'une quelconque des revendications précédentes, dans lequel la ou au moins une lentille dudit troisième élément optique est produite par moulage de verre.

7. Appareil optique à balayage selon l'une quelconque des revendications 1 à 6, dans lequel la ou au moins une lentille dudit troisième élément optique est produite par moulage d'une matière plastique.

8. Appareil optique à balayage selon l'une quelconque des revendications 1 à 7, dans lequel ladite source de lumière (1 ; 11) comporte un laser à semiconducteur.

9. Appareil optique à balayage selon l'une quelconque des revendications 1 à 8, dans lequel ledit premier élément optique comprend une lentille collimatrice (2) agencée de façon à collimater le faisceau lumineux émis depuis ladite source de lumière (1), et une lentille cylindrique (4) agencée de façon à former l'image linéaire allongée dans la direction de balayage principal à partir du faisceau parallèle transmis à travers la lentille collimatrice (2).

10. Appareil optique à balayage selon la revendication 9, comprenant un diaphragme (3) entre ladite lentille collimatrice (2) et ladite lentille cylindrique (4).

11. Appareil optique à balayage selon l'une quelconque des revendications 1 à 10, dans lequel ledit élément (5 ; 15) de déviation comporte un miroir polygonal.

12. Appareil optique à balayage selon la revendication 1, dans lequel la surface de lentille d'entrée dudit troisième élément optique a une section transversale, prise sur la direction de balayage secondaire, qui est concave dans la position sur l'axe et convexe à chaque extrémité de la partie effective.

13. Imprimante à faisceau laser comprenant un appareil optique à balayage selon l'une quelconque des revendications 1 à 11, dans laquelle ladite surface (8) devant être balayée est une surface photosensible.

FIG. 1

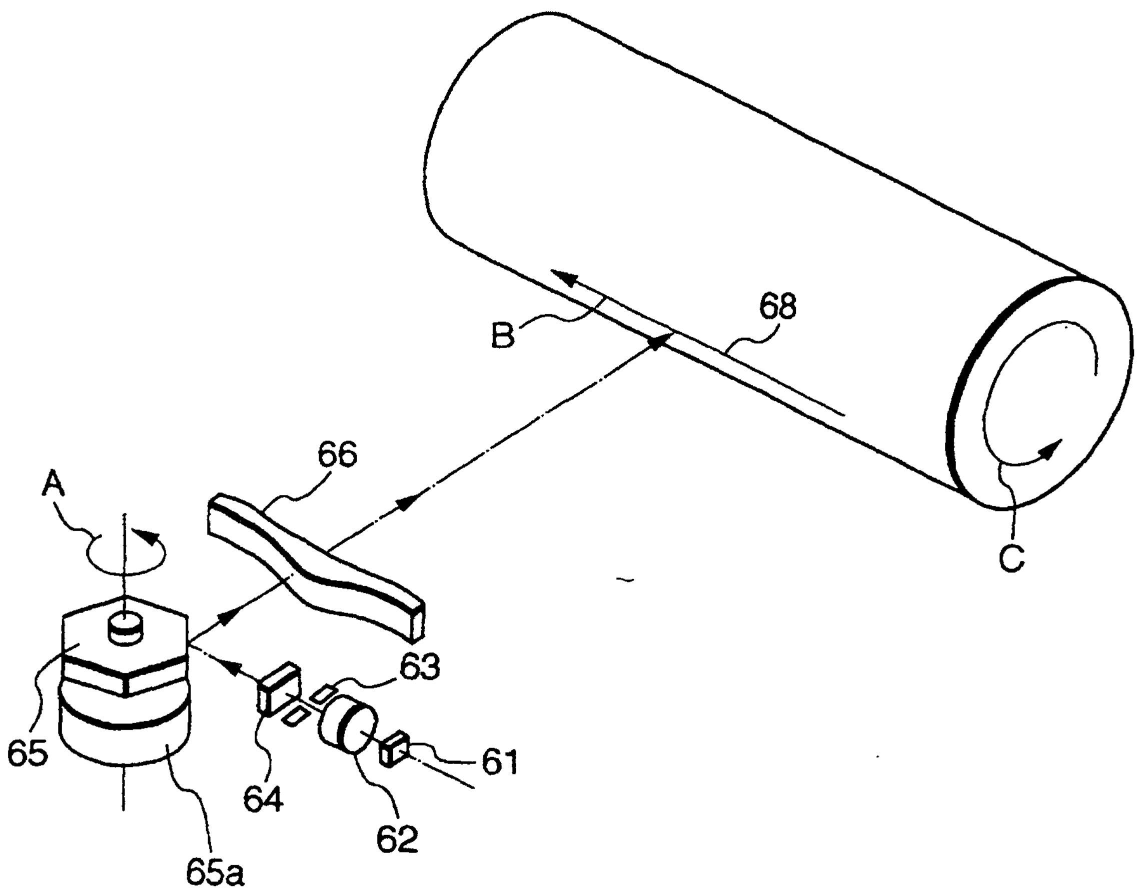

FIG. 2A

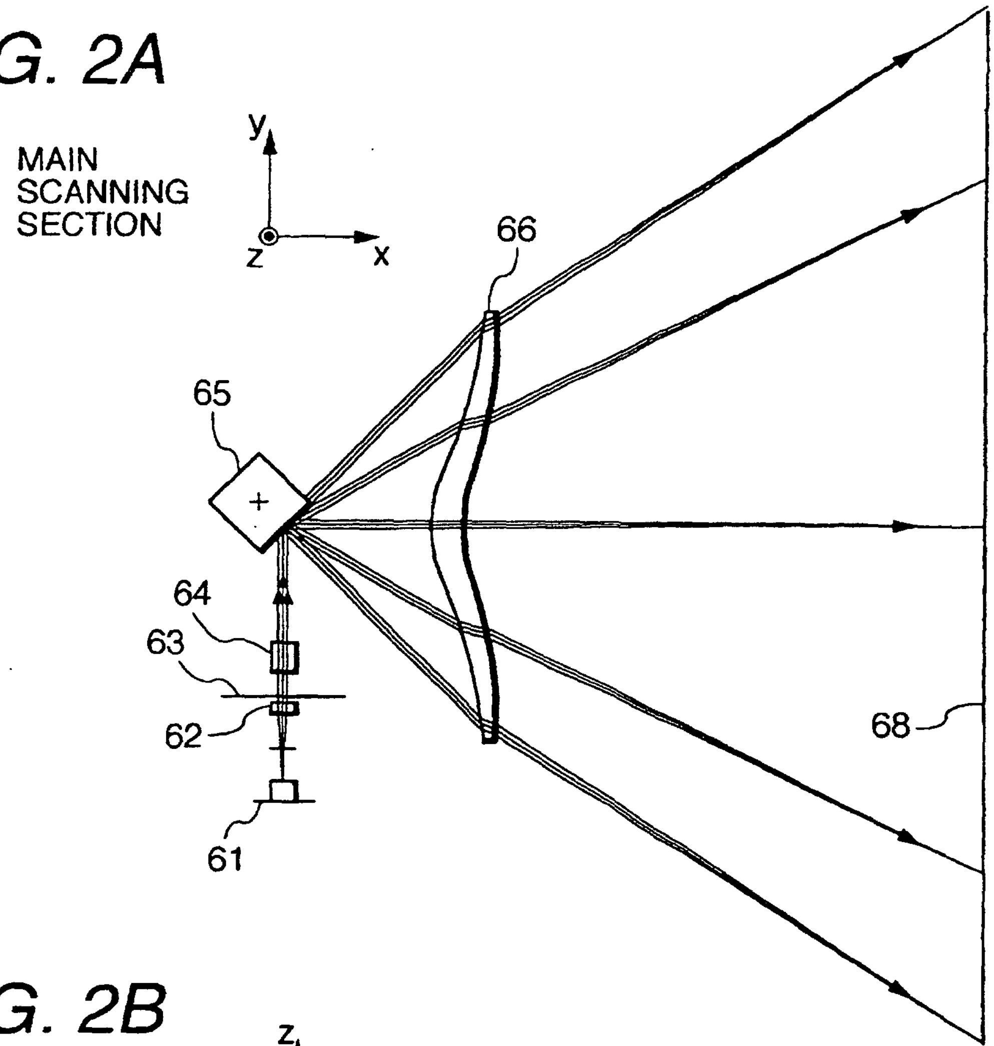
MAIN
SCANNING
SECTION
y
z
x
66
65
64
63
62
61
68

FIG. 2B

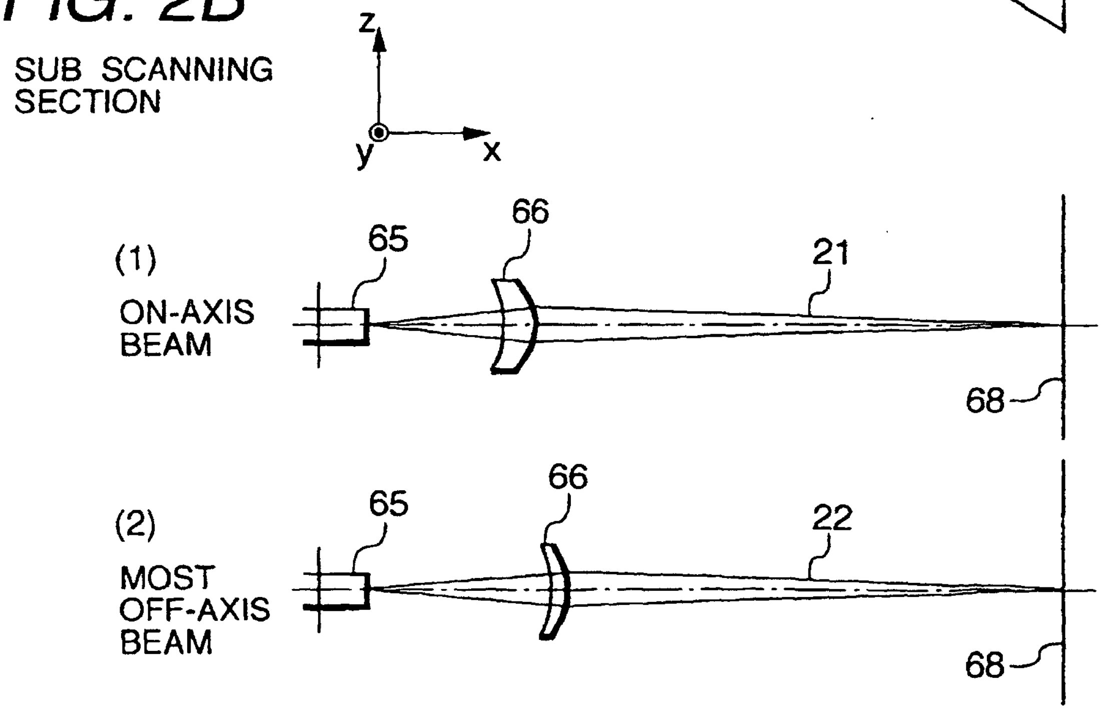
SUB SCANNING
SECTION
z
y
x
(1)
ON-AXIS
BEAM
65
66
21
68
(2)
MOST
OFF-AXIS
BEAM
65
66
22
68

FIG. 3

MAIN SCANNING SECTION

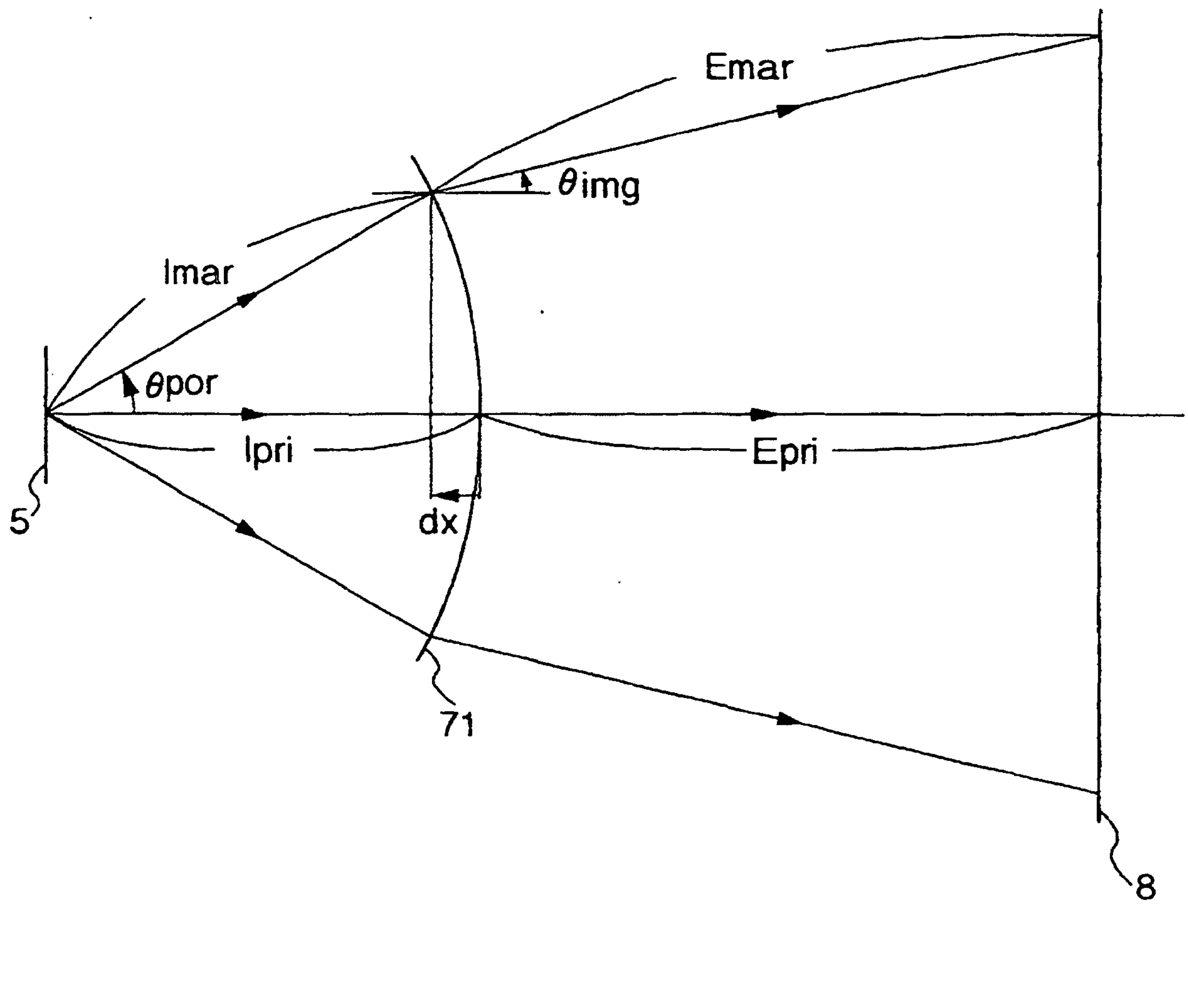

FIG. 4A

MAIN SCANNING SECTION

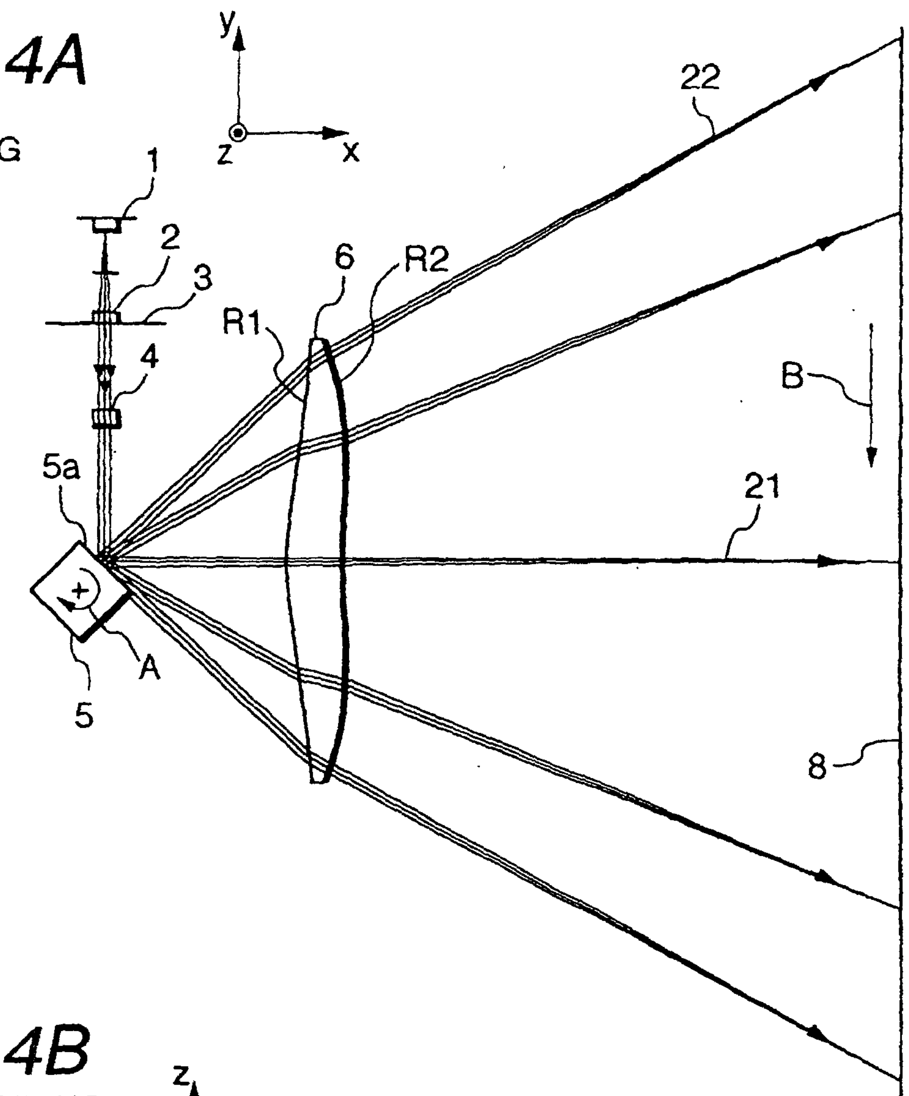


FIG. 4B

SUB SCANNING SECTION

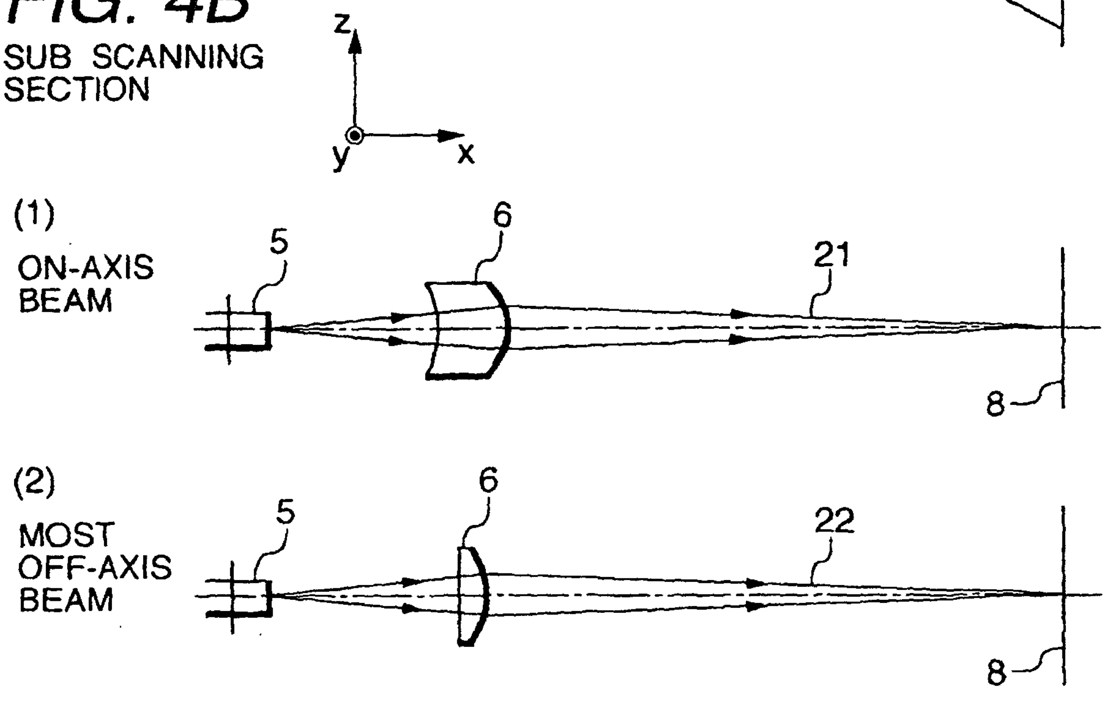

FIG. 5

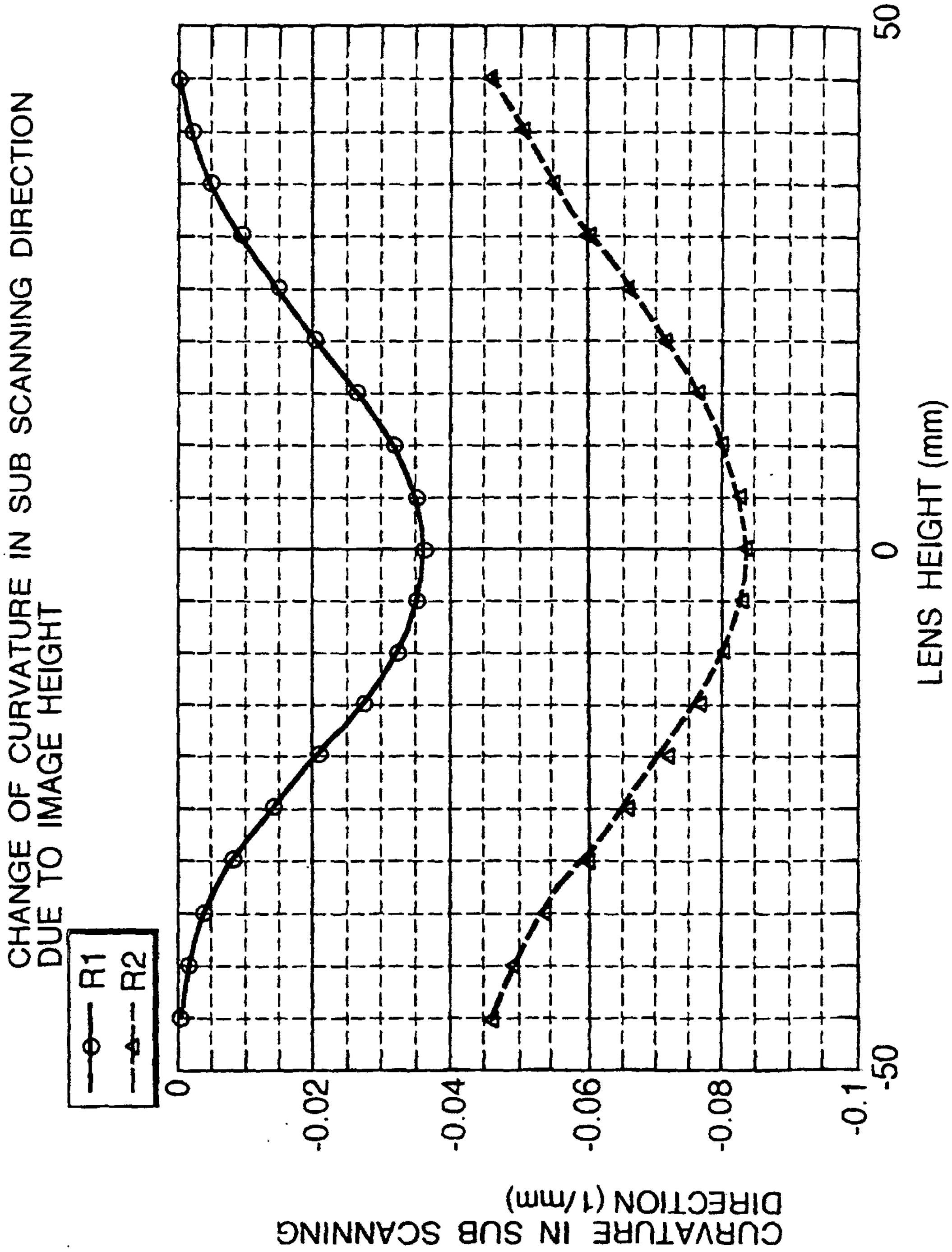
CHANGE OF CURVATURE IN SUB SCANNING DIRECTION
DUE TO IMAGE HEIGHT
R1
R2
0
-0.02
-0.04
-0.06
-0.08
-0.1
-50
0
50
LENS HEIGHT (mm)
CURVATURE IN SUB SCANNING
DIRECTION (1/mm)

# FIG. 6

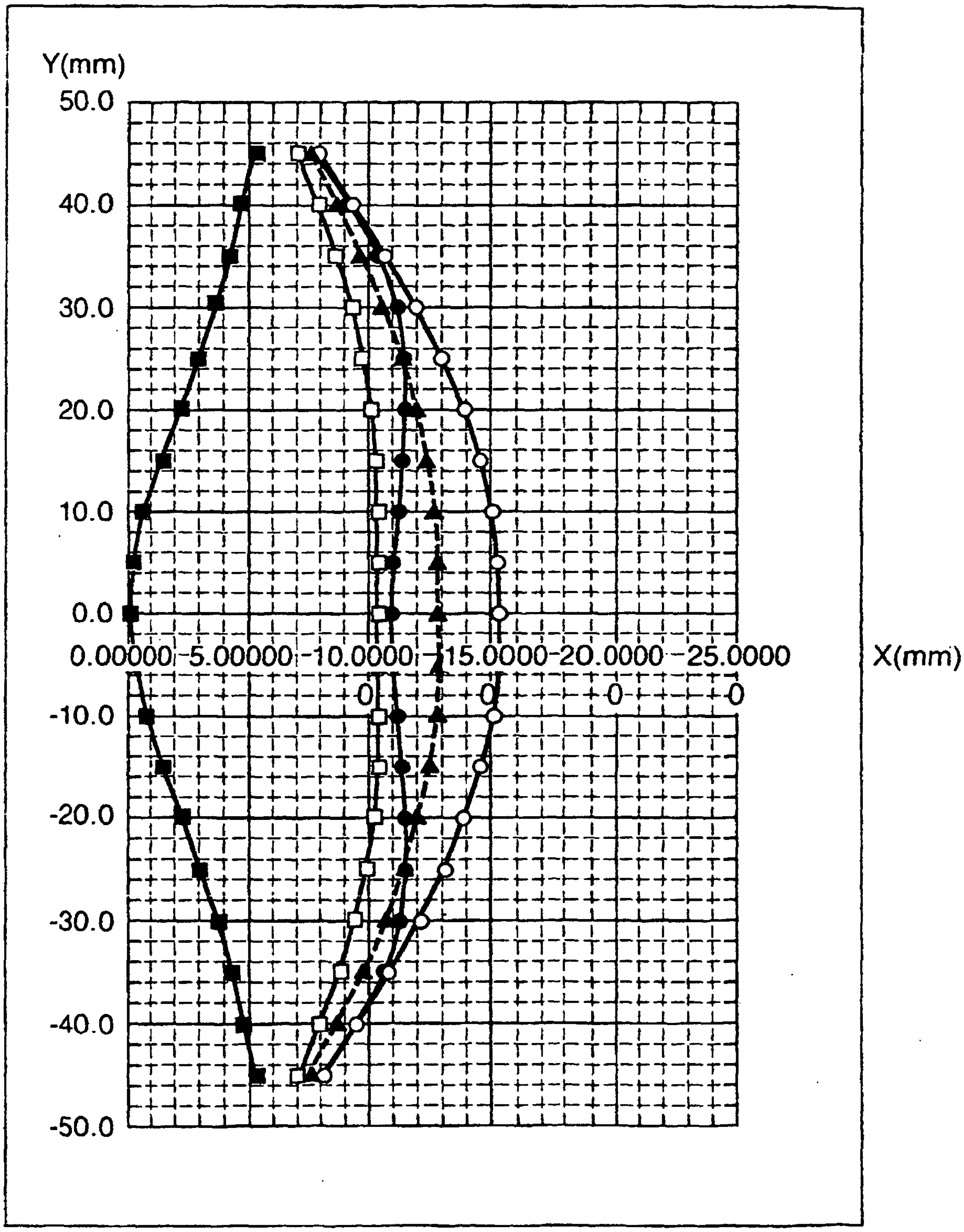
Y(mm)
50.0
40.0
30.0
20.0
10.0
0.0
-10.0
-20.0
-30.0
-40.0
-50.0
0.00000 -5.00000 -10.0000 -15.0000 -20.0000 -25.0000
0 0 0 0
X(mm)

FIG. 7

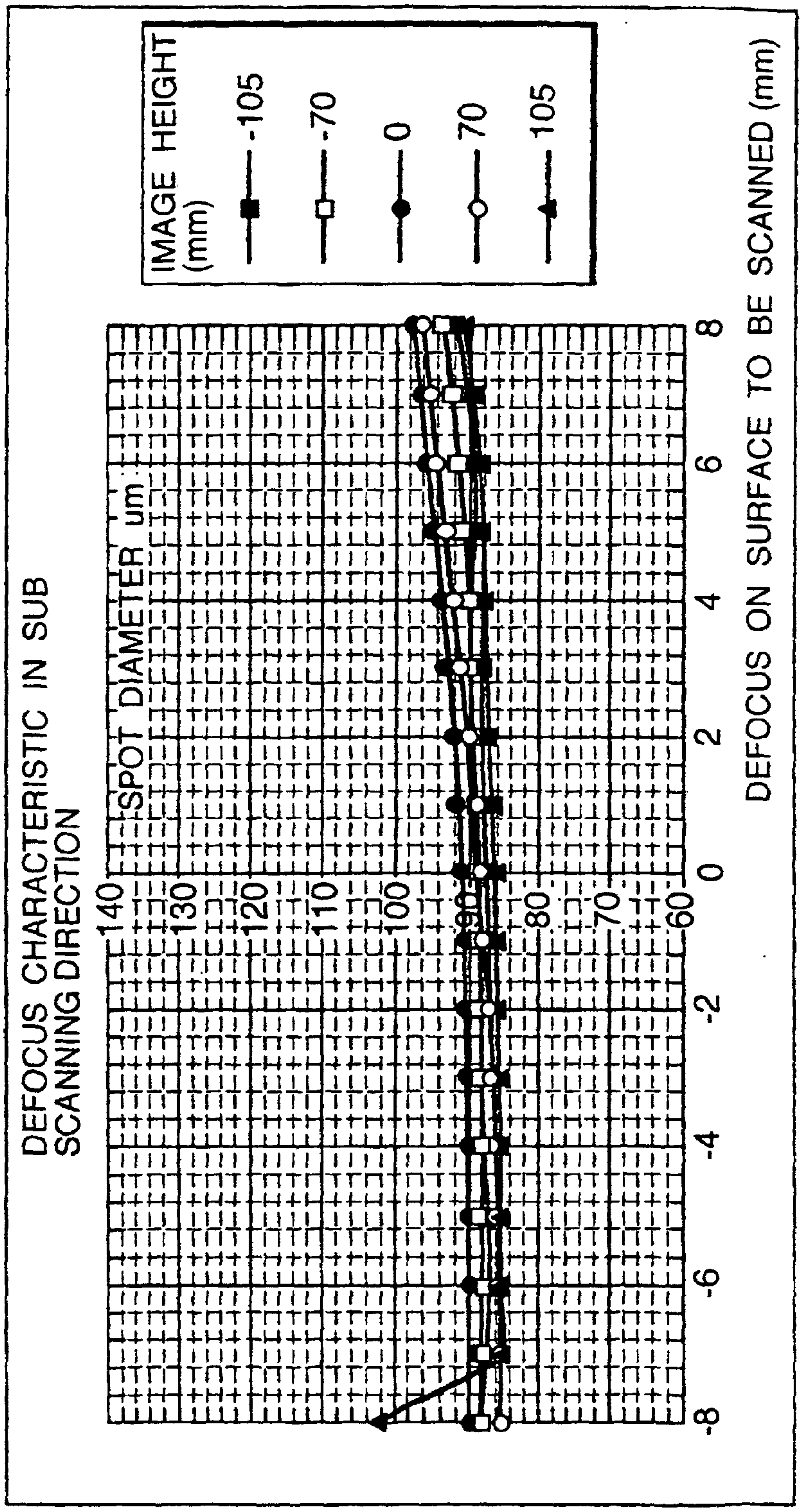
DEFOCUS CHARACTERISTIC IN SUB SCANNING DIRECTION
SPOT DIAMETER um
140
130
120
110
100
90
80
70
60
-8
-6
-4
-2
0
2
4
6
8
DEFOCUS ON SURFACE TO BE SCANNED (mm)
IMAGE HEIGHT (mm)
-105
-70
0
70
105

FIG. 8A

MAIN SCANNING SECTION

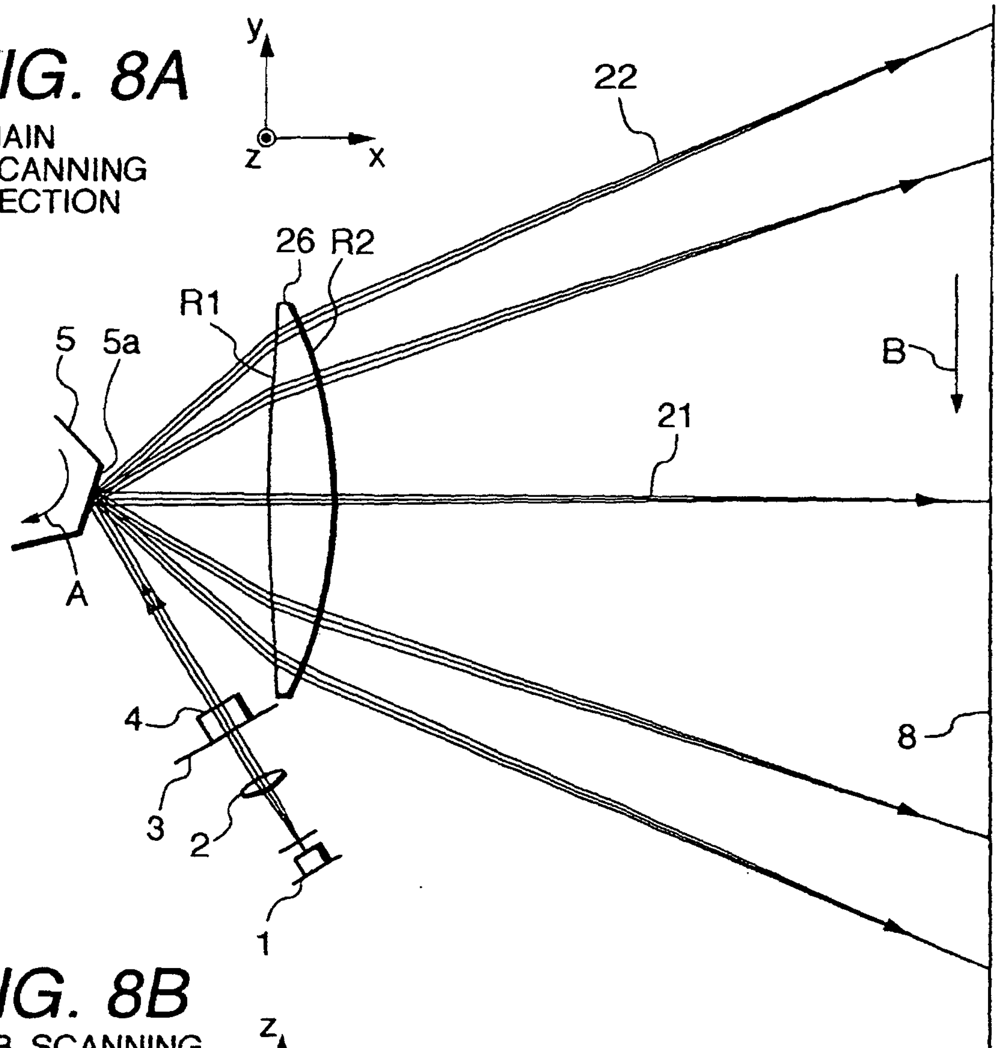


FIG. 8B

SUB SCANNING SECTION

(1)

ON-AXIS BEAM

(2)

MOST OFF-AXIS BEAM

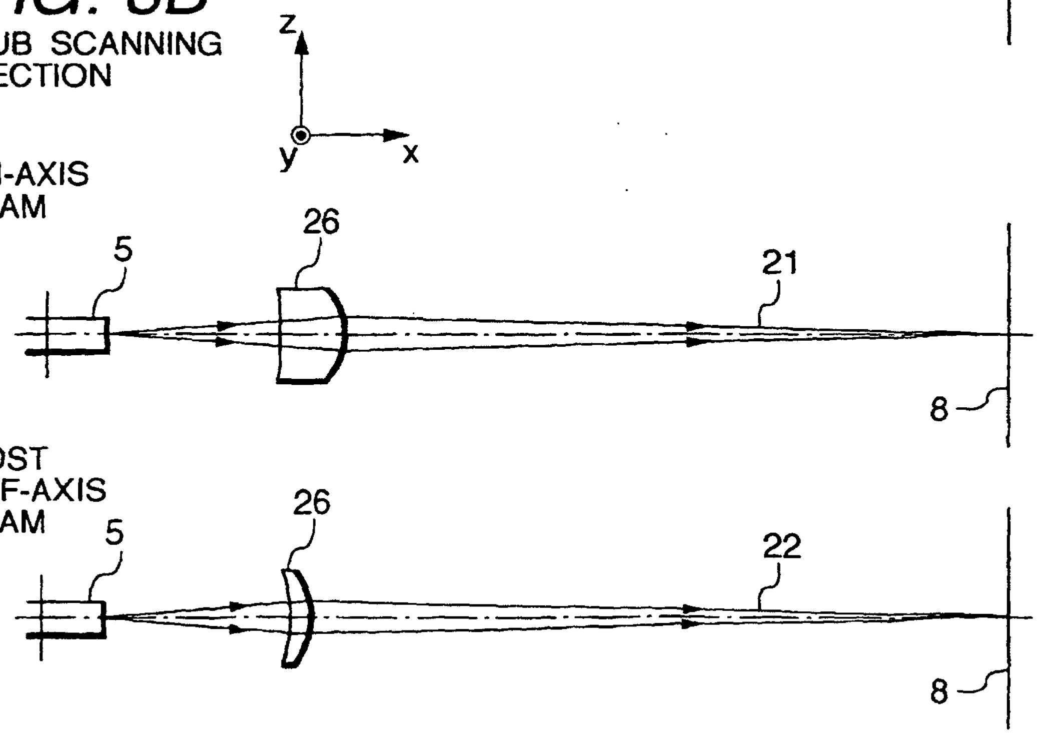

FIG. 9

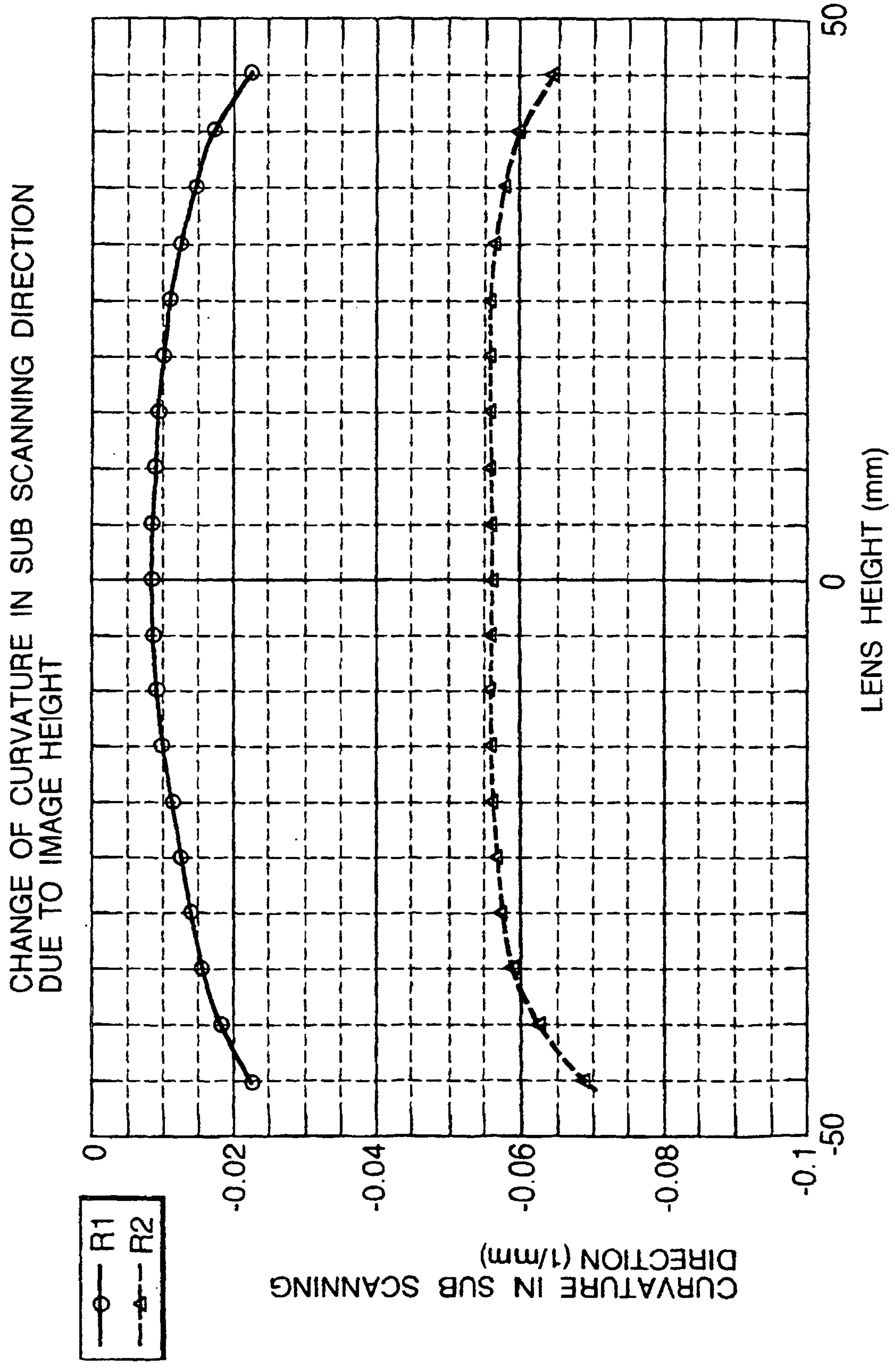
CHANGE OF CURVATURE IN SUB SCANNING DIRECTION
DUE TO IMAGE HEIGHT
R1
R2
0
-0.02
-0.04
-0.06
-0.08
-0.1
CURVATURE IN SUB SCANNING DIRECTION (1/mm)
-50
0
50
LENS HEIGHT (mm)

FIG. 10

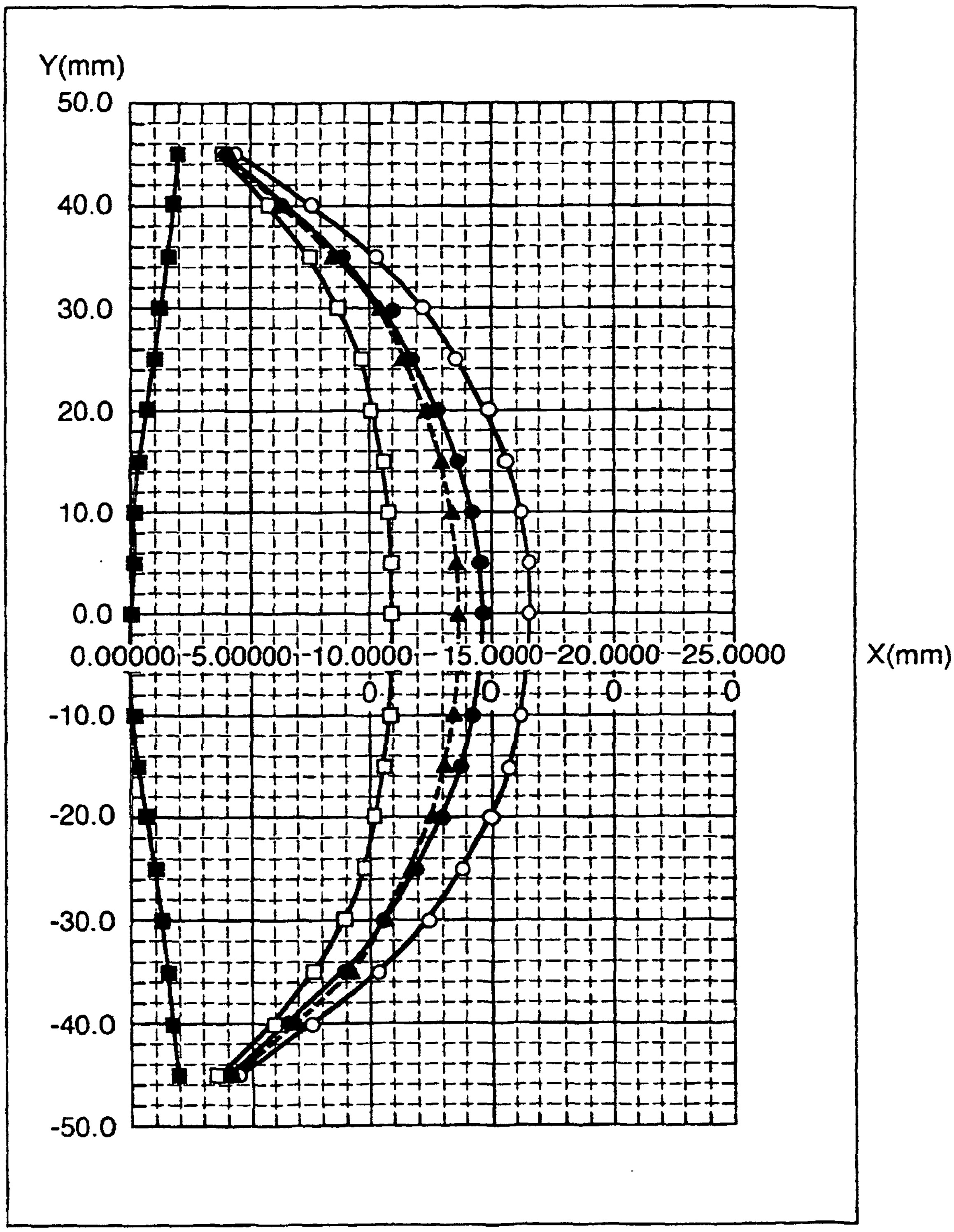
Y(mm)
50.0
40.0
30.0
20.0
10.0
0.0
-10.0
-20.0
-30.0
-40.0
-50.0
0.00000
-5.00000
-10.0000
-15.0000
-20.0000
-25.0000
0
0
0
0
X(mm)

FIG. 11

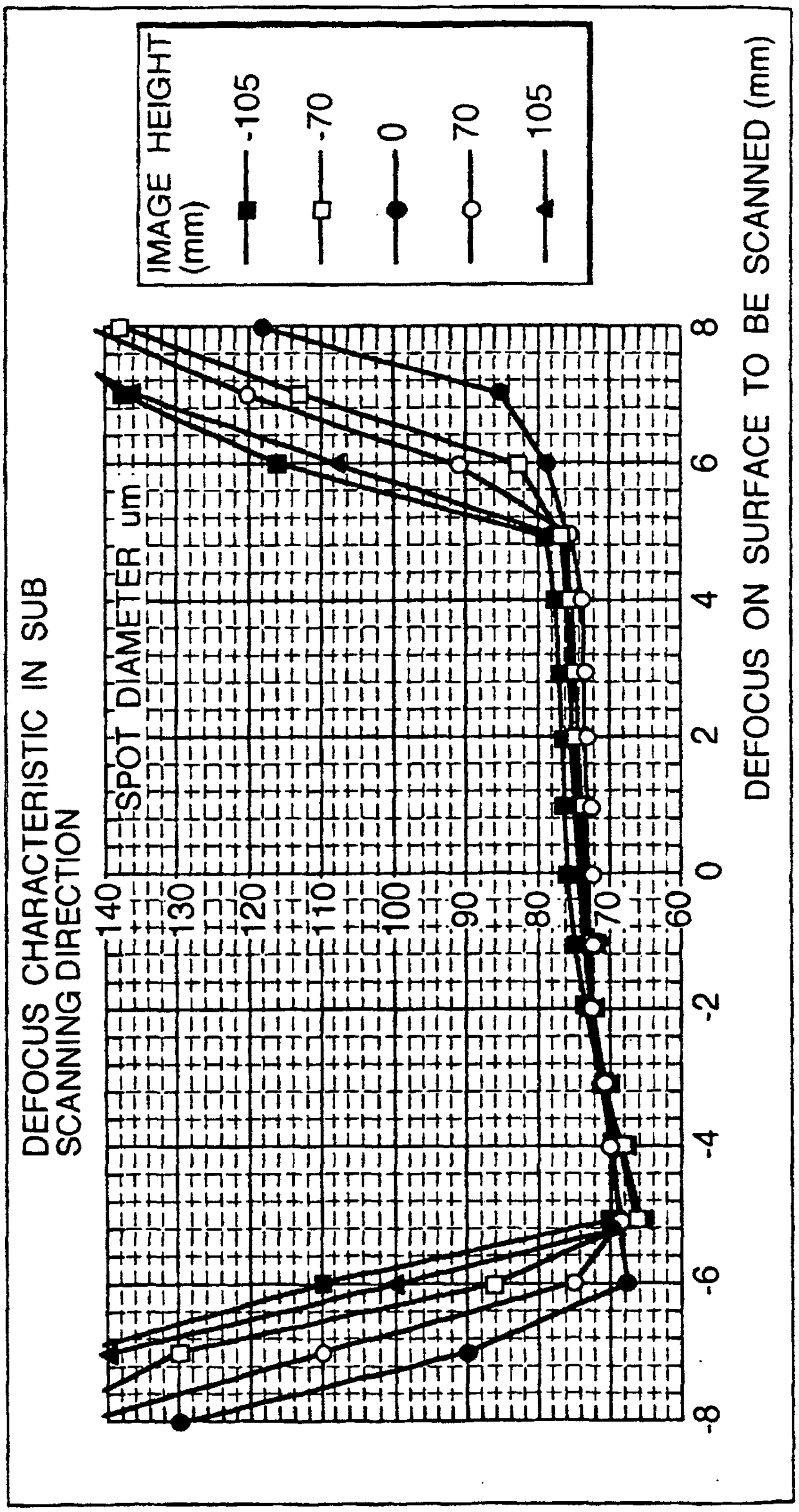
DEFOCUS CHARACTERISTIC IN SUB SCANNING DIRECTION
SPOT DIAMETER um
140
130
120
110
100
90
80
70
60
-8
-6
-4
-2
0
2
4
6
8
DEFOCUS ON SURFACE TO BE SCANNED (mm)
IMAGE HEIGHT (mm)
-105
-70
0
70
105

FIG. 12A

MAIN SCANNING SECTION

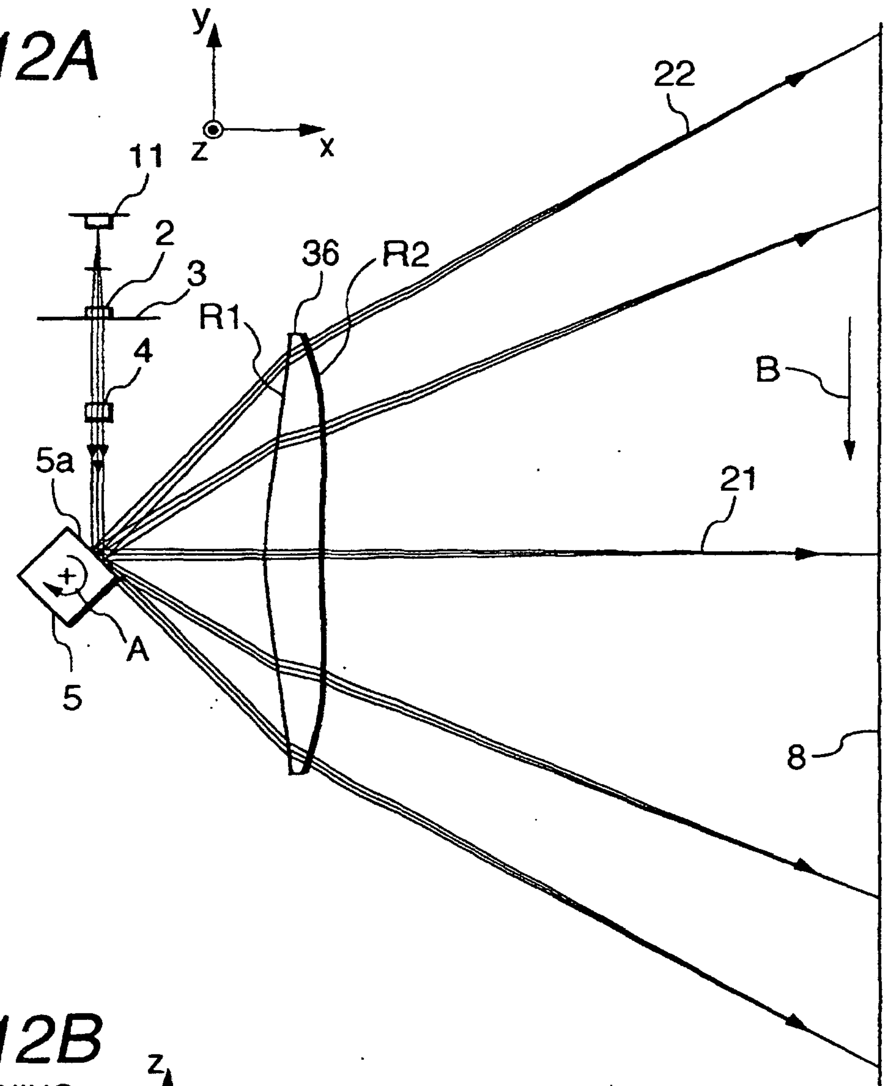


FIG. 12B

SUB SCANNING SECTION

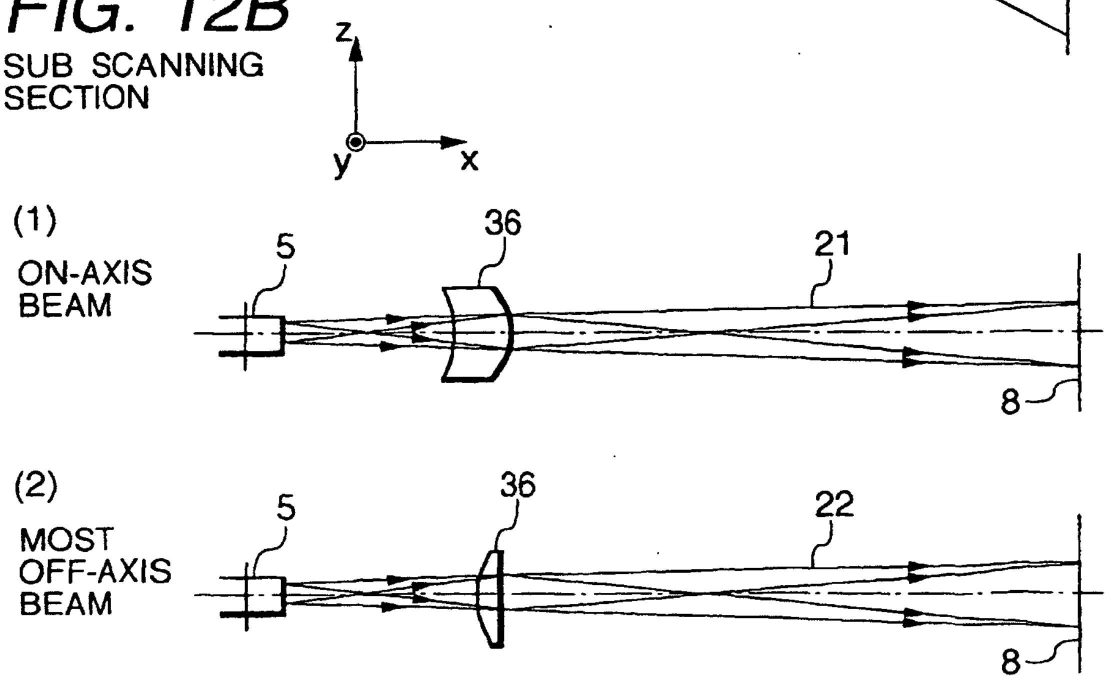

FIG. 13

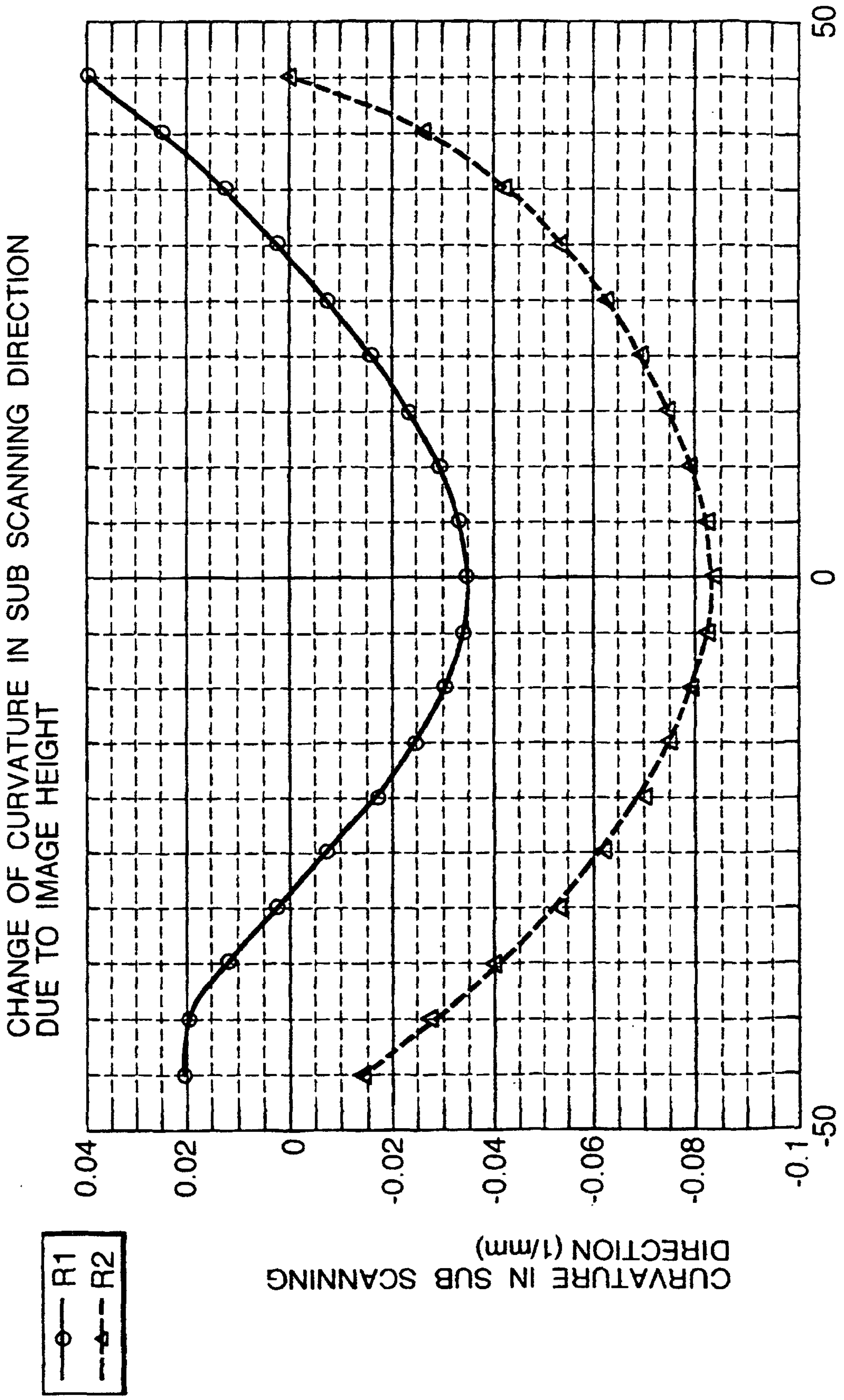
CHANGE OF CURVATURE IN SUB SCANNING DIRECTION DUE TO IMAGE HEIGHT
R1
R2
CURVATURE IN SUB SCANNING DIRECTION (1/mm)
0.04
0.02
0
-0.02
-0.04
-0.06
-0.08
-0.1
LENS HEIGHT (mm)
-50
0
50

*FIG. 14*

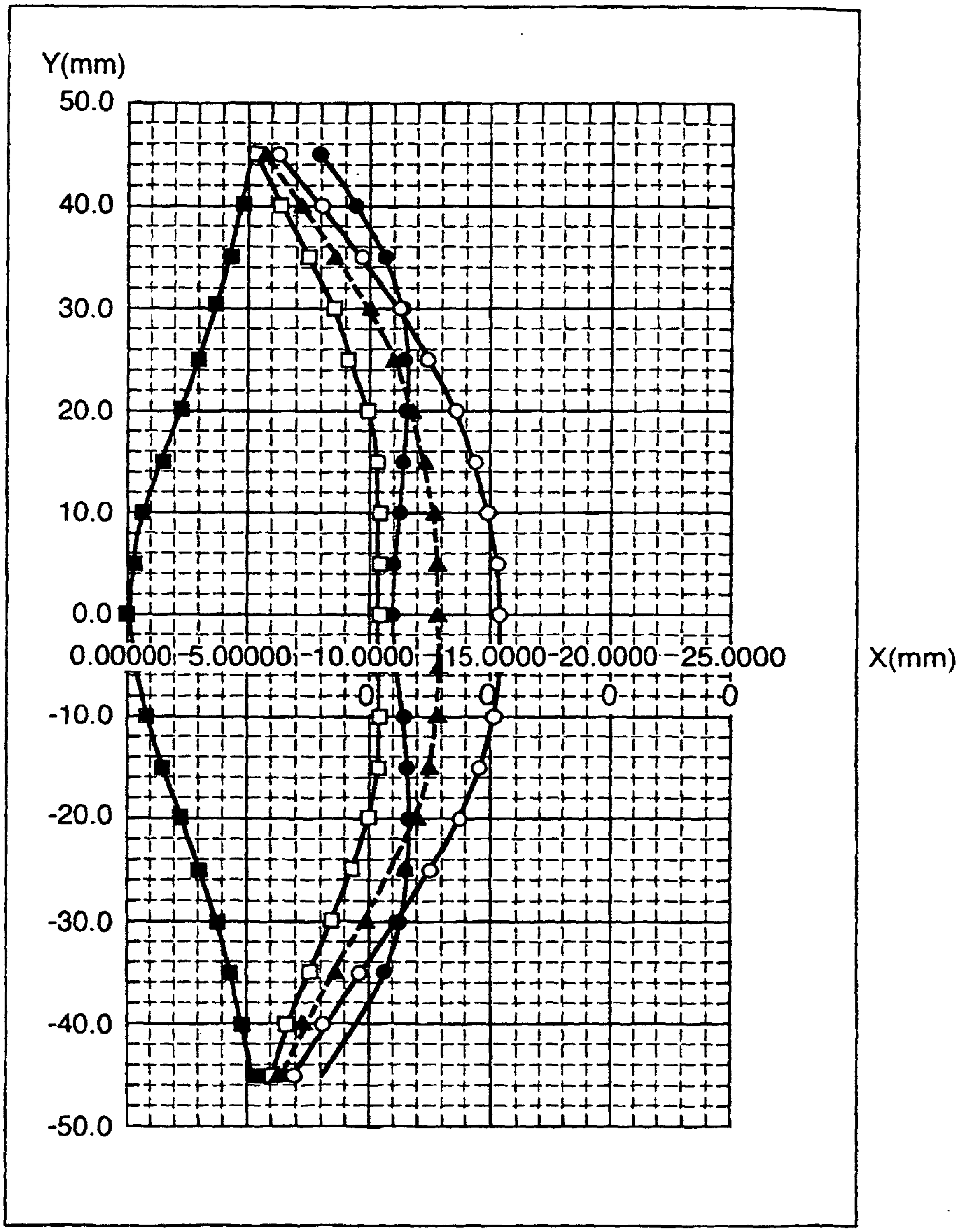
Y(mm)
50.0
40.0
30.0
20.0
10.0
0.0
-10.0
-20.0
-30.0
-40.0
-50.0
0.00000 -5.00000 -10.0000 -15.0000 -20.0000 -25.0000
0 0 0 0
X(mm)

FIG. 15

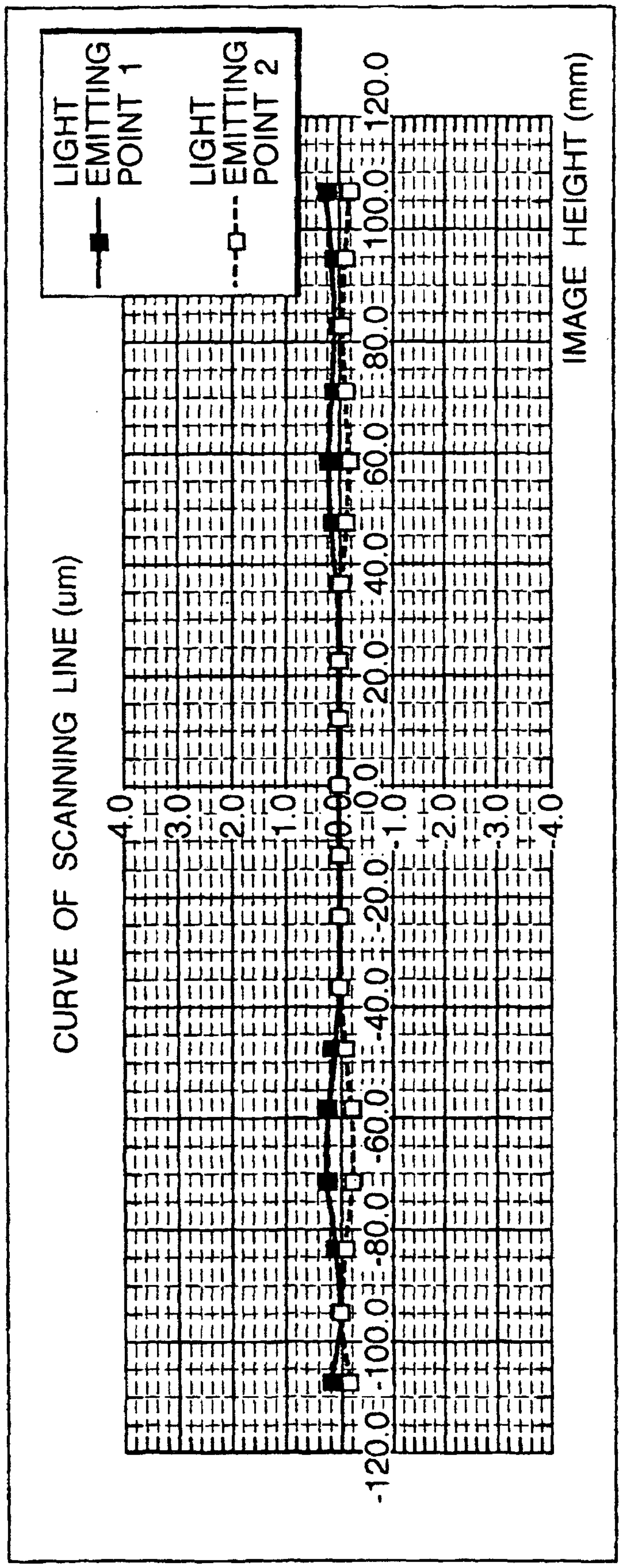
CURVE OF SCANNING LINE (um)
IMAGE HEIGHT (mm)
LIGHT EMITTING POINT 1
LIGHT EMITTING POINT 2
4.0
3.0
2.0
1.0
0.0
-1.0
-2.0
-3.0
-4.0
-120.0
-100.0
-80.0
-60.0
-40.0
-20.0
0.0
20.0
40.0
60.0
80.0
100.0
120.0

FIG. 16A

MAIN SCANNING SECTION

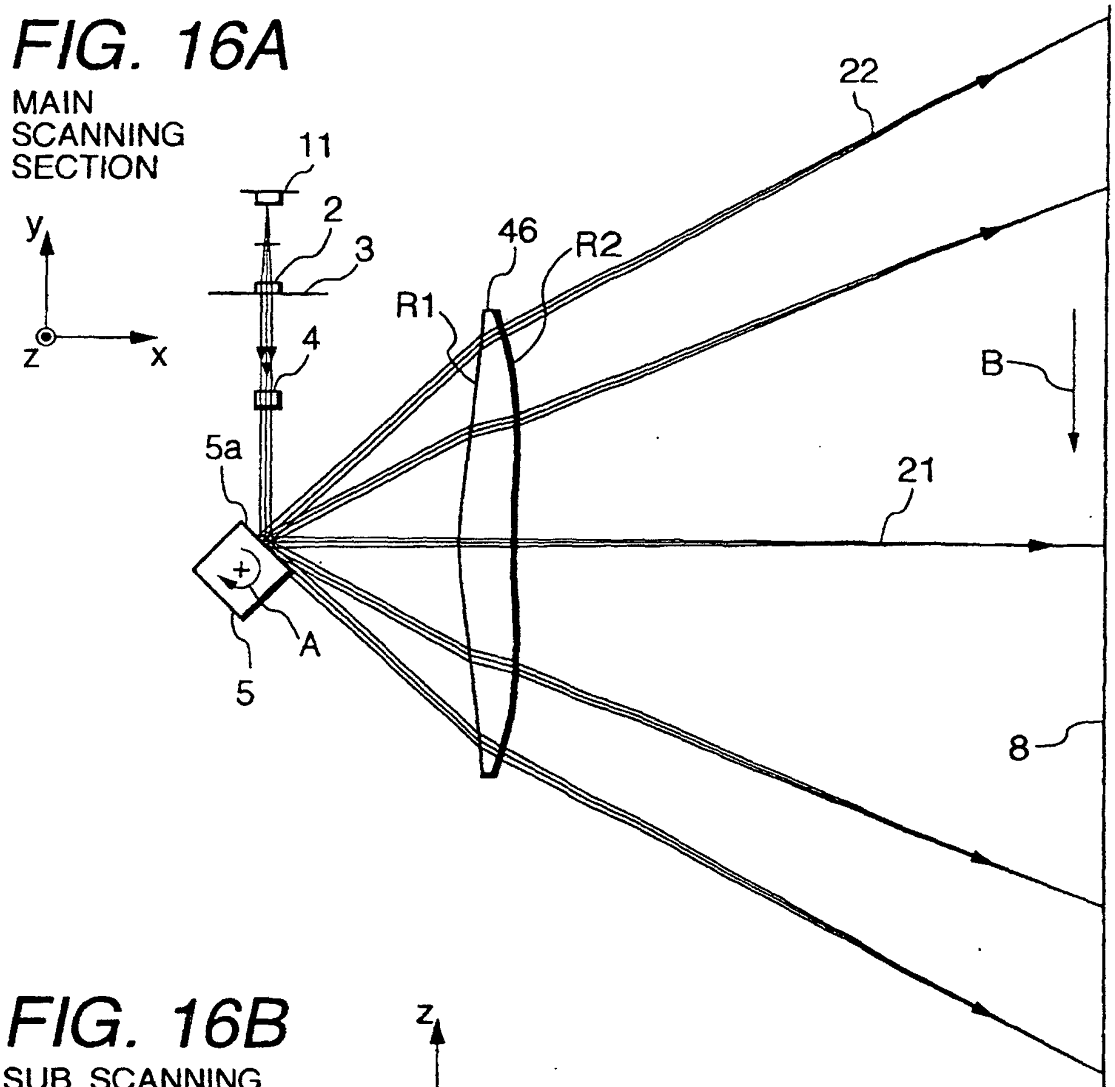


FIG. 16B

SUB SCANNING SECTION

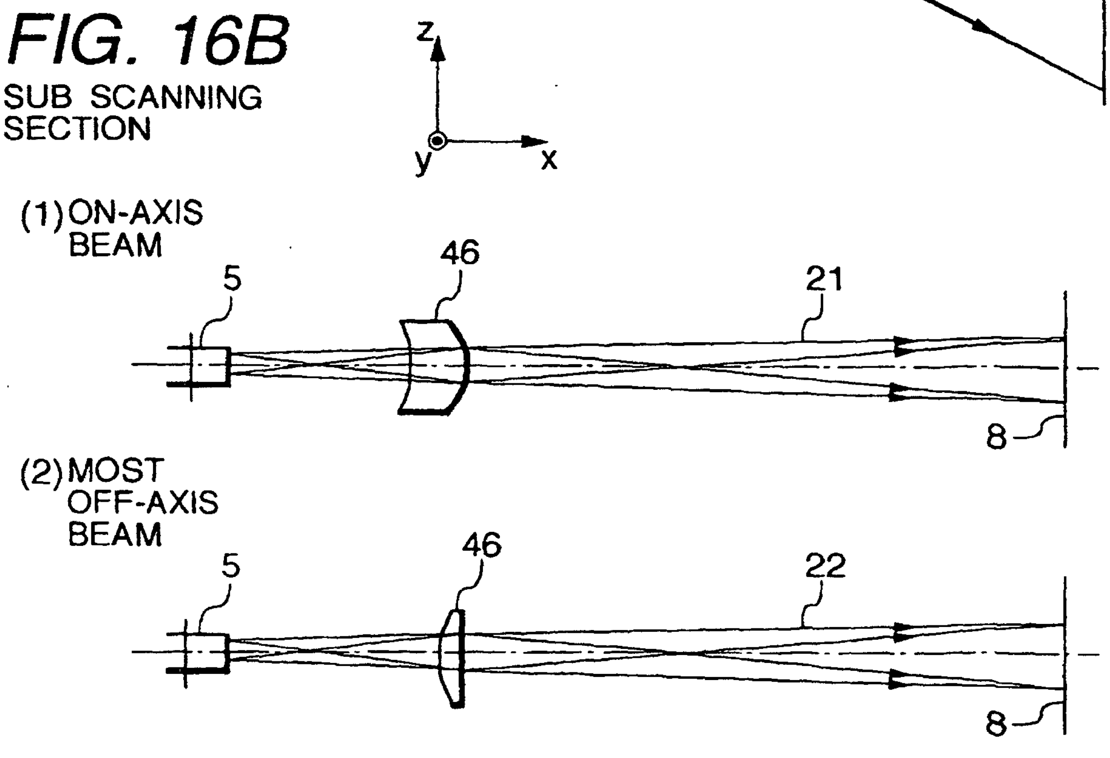

FIG. 17

CHANGE OF SUB SCANNING Fno

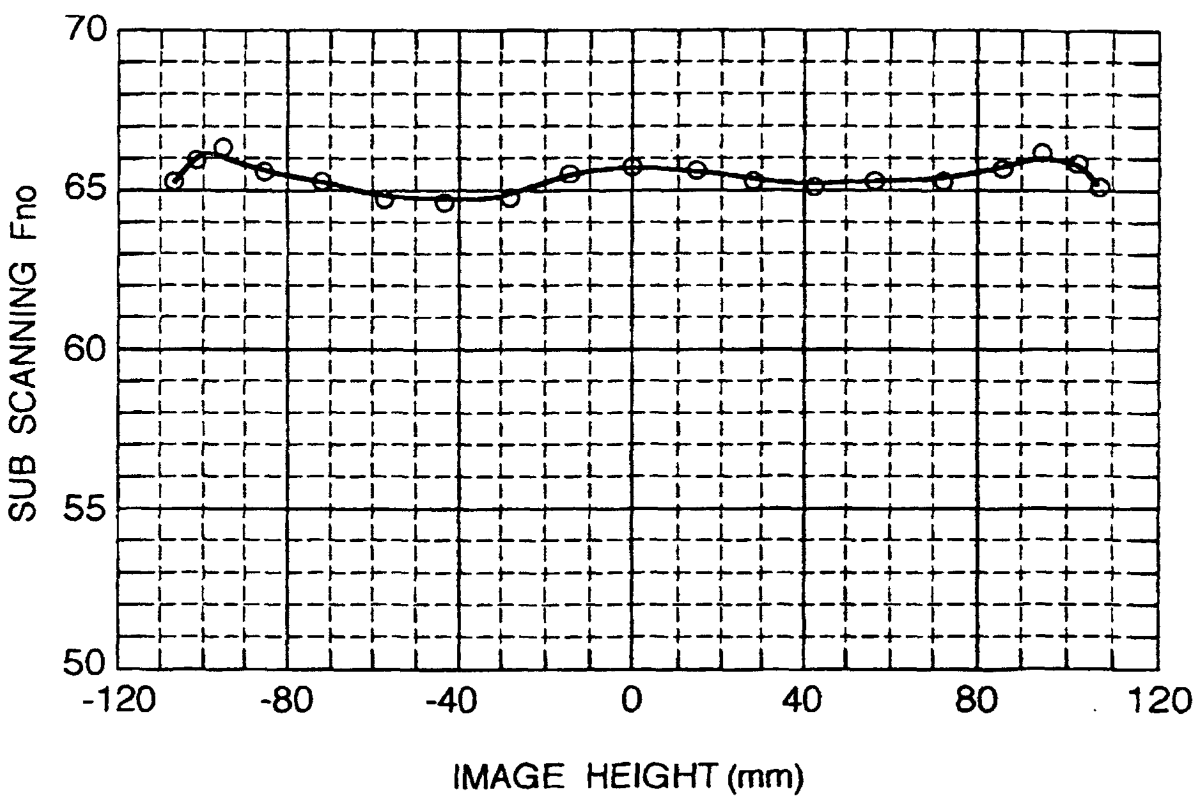

FIG. 18

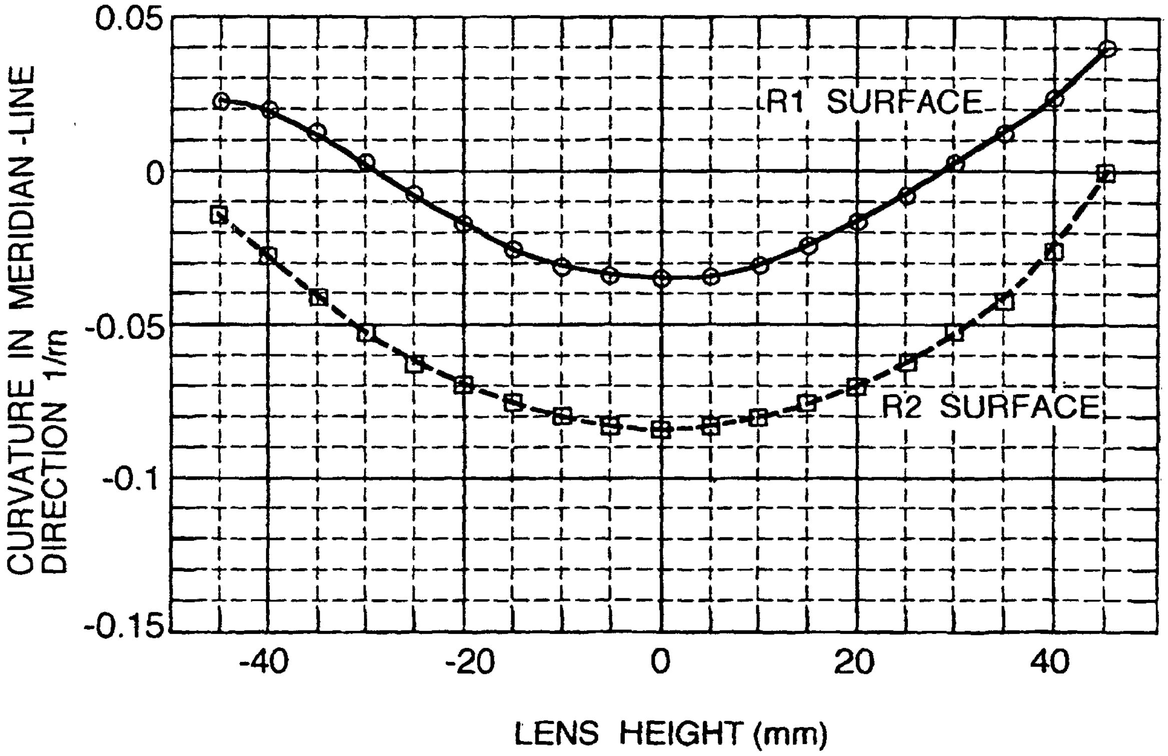
0.05
0
-0.05
-0.1
-0.15
-40
-20
0
20
40
R1 SURFACE
R2 SURFACE
CURVATURE IN MERIDIAN -LINE DIRECTION 1/m
LENS HEIGHT (mm)

FIG. 19

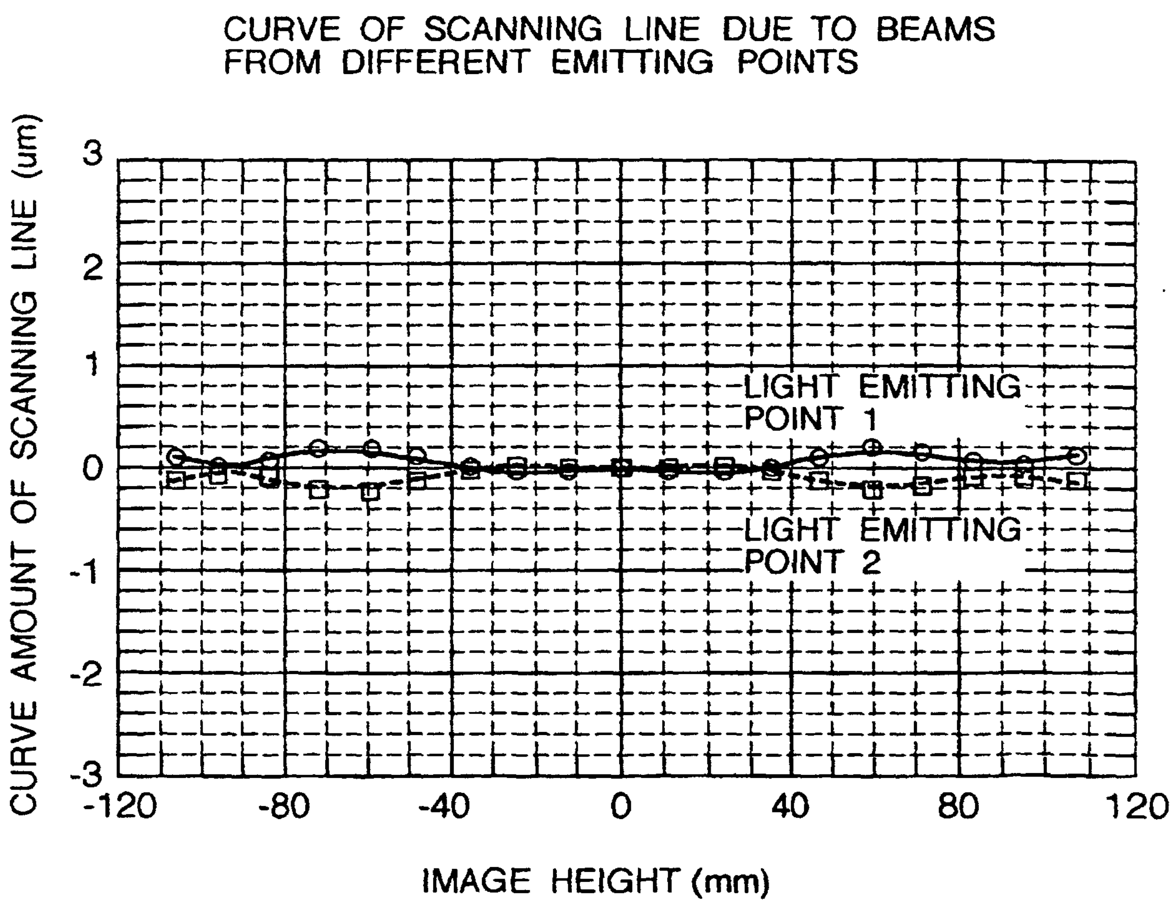
CURVE OF SCANNING LINE DUE TO BEAMS
FROM DIFFERENT EMITTING POINTS
CURVE AMOUNT OF SCANNING LINE (um)
3
2
1
0
-1
-2
-3
-120
-80
-40
0
40
80
120
IMAGE HEIGHT (mm)
LIGHT EMITTING POINT 1
LIGHT EMITTING POINT 2

FIG. 20A

MAIN SCANNING SECTION

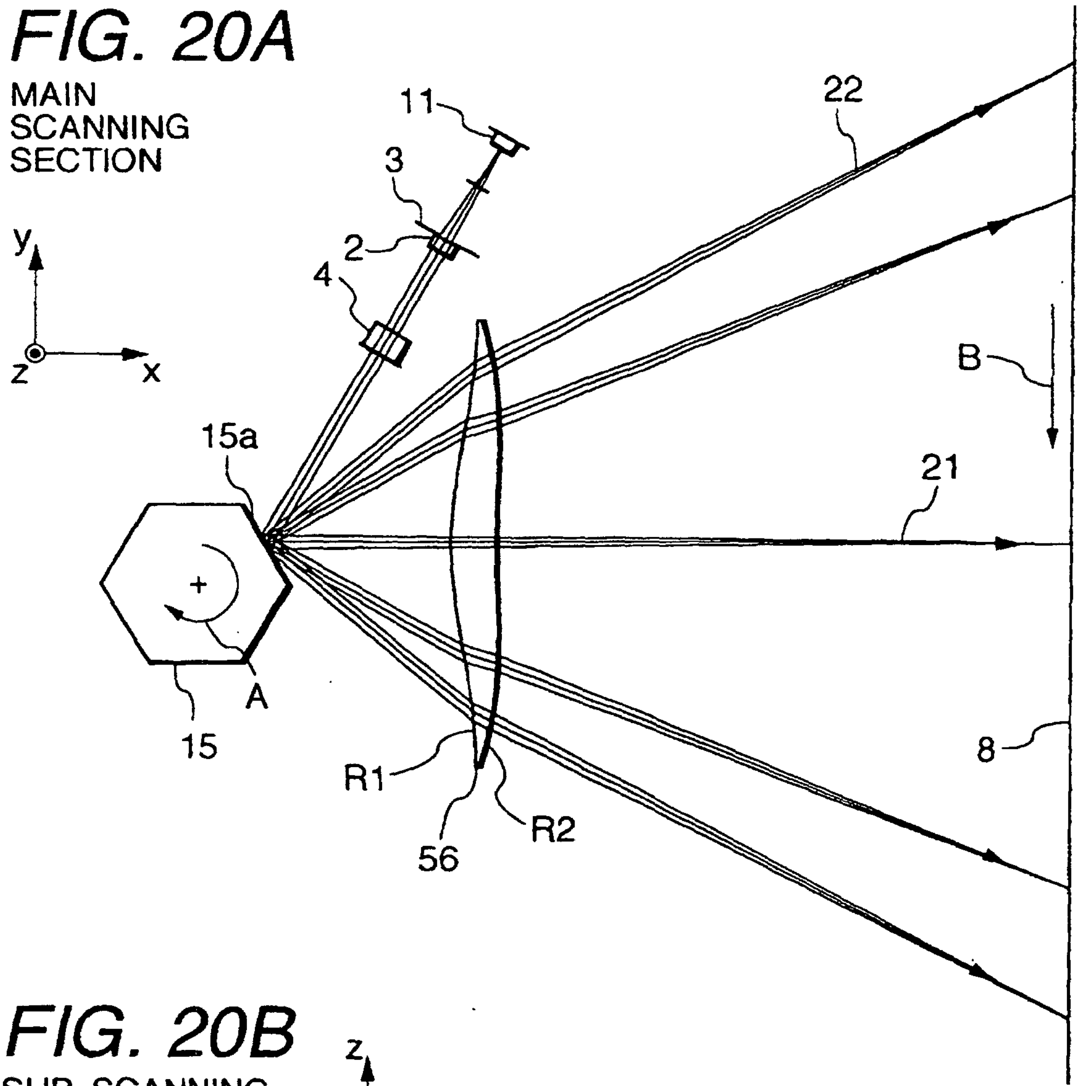


FIG. 20B

SUB SCANNING SECTION

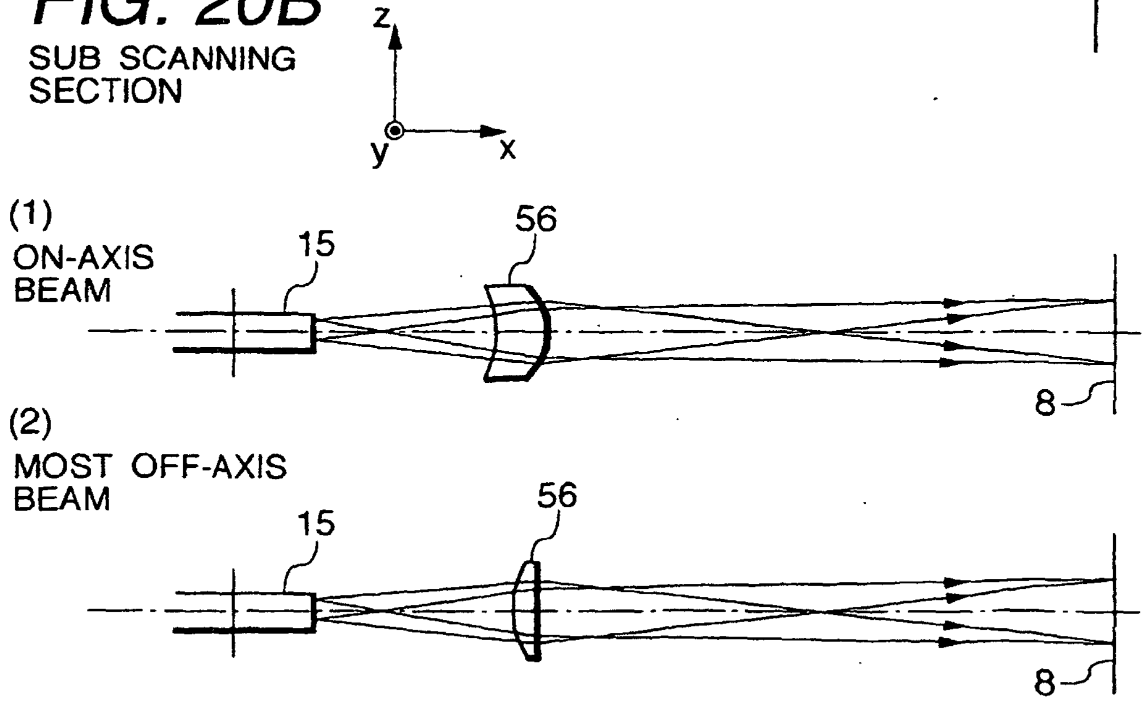

FIG. 21

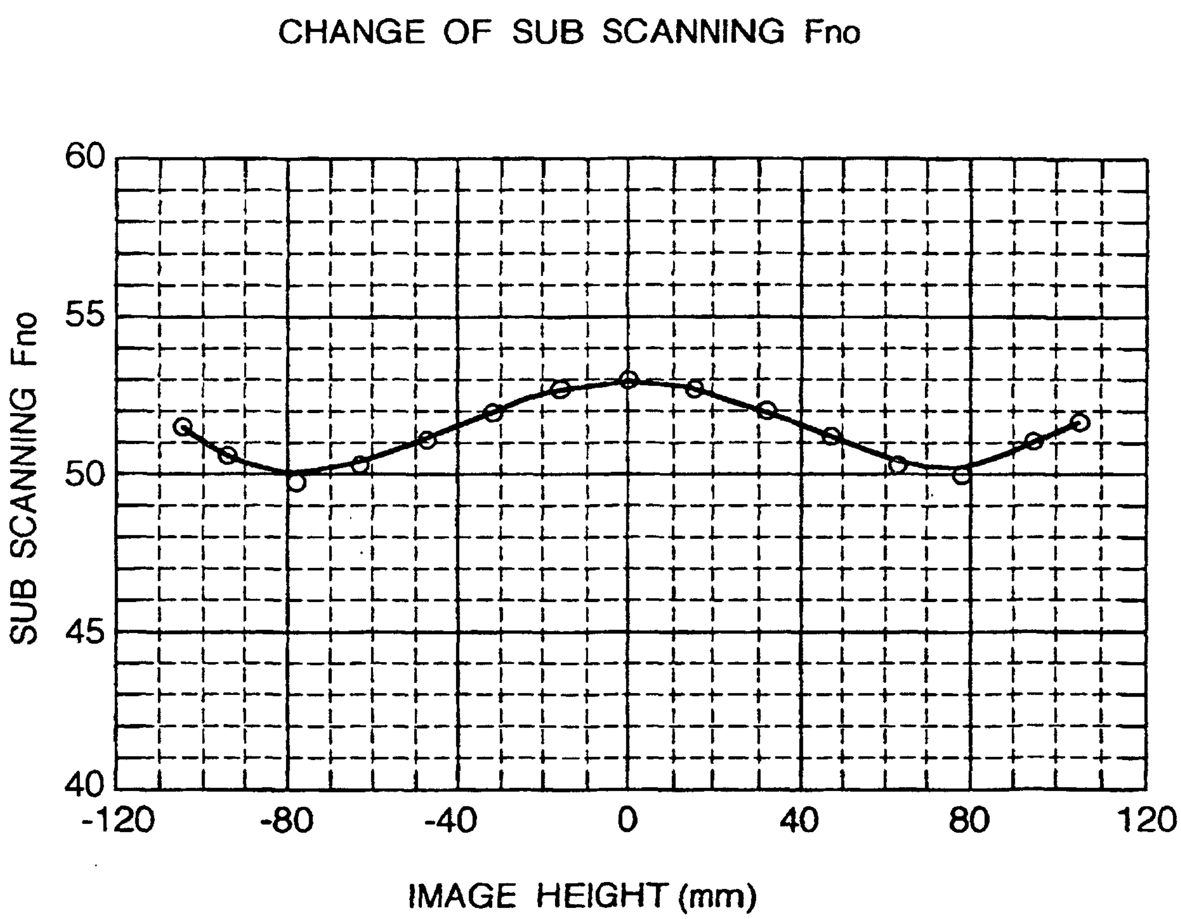
CHANGE OF SUB SCANNING Fno
SUB SCANNING Fno
60
55
50
45
40
-120
-80
-40
0
40
80
120
IMAGE HEIGHT (mm)

FIG. 22

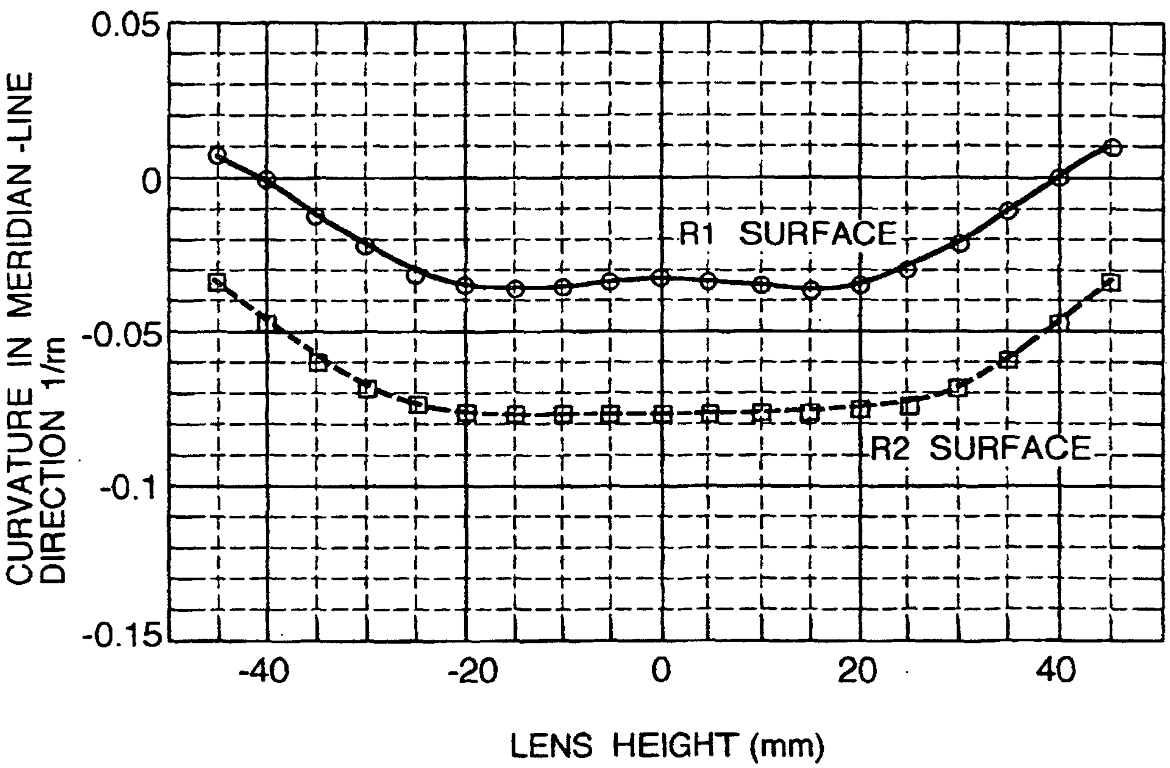
0.05
0
-0.05
-0.1
-0.15
CURVATURE IN MERIDIAN -LINE DIRECTION 1/m
R1 SURFACE
R2 SURFACE
-40
-20
0
20
40
LENS HEIGHT (mm)

FIG. 23

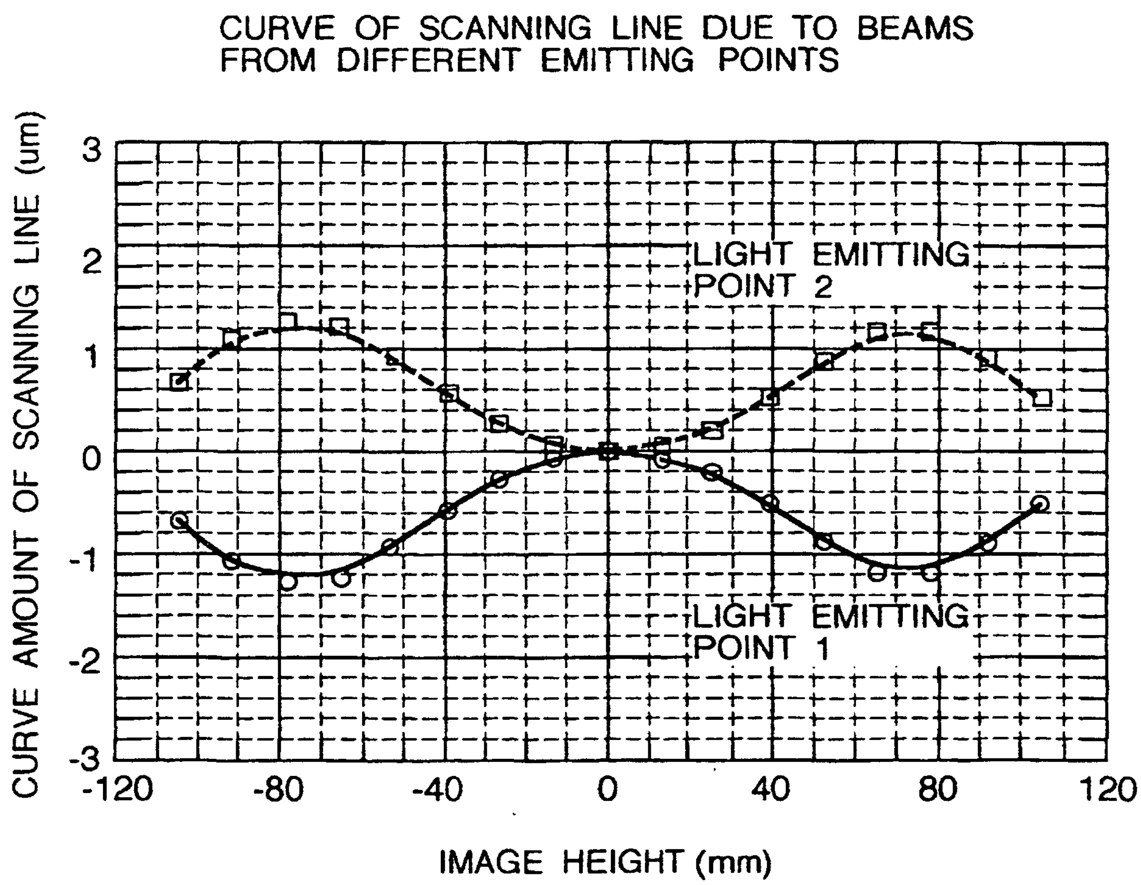
CURVE OF SCANNING LINE DUE TO BEAMS FROM DIFFERENT EMITTING POINTS
CURVE AMOUNT OF SCANNING LINE (um)
3
2
1
0
-1
-2
-3
-120
-80
-40
0
40
80
120
IMAGE HEIGHT (mm)
LIGHT EMITTING POINT 2
LIGHT EMITTING POINT 1

FIG. 24A

MAIN SCANNING SECTION

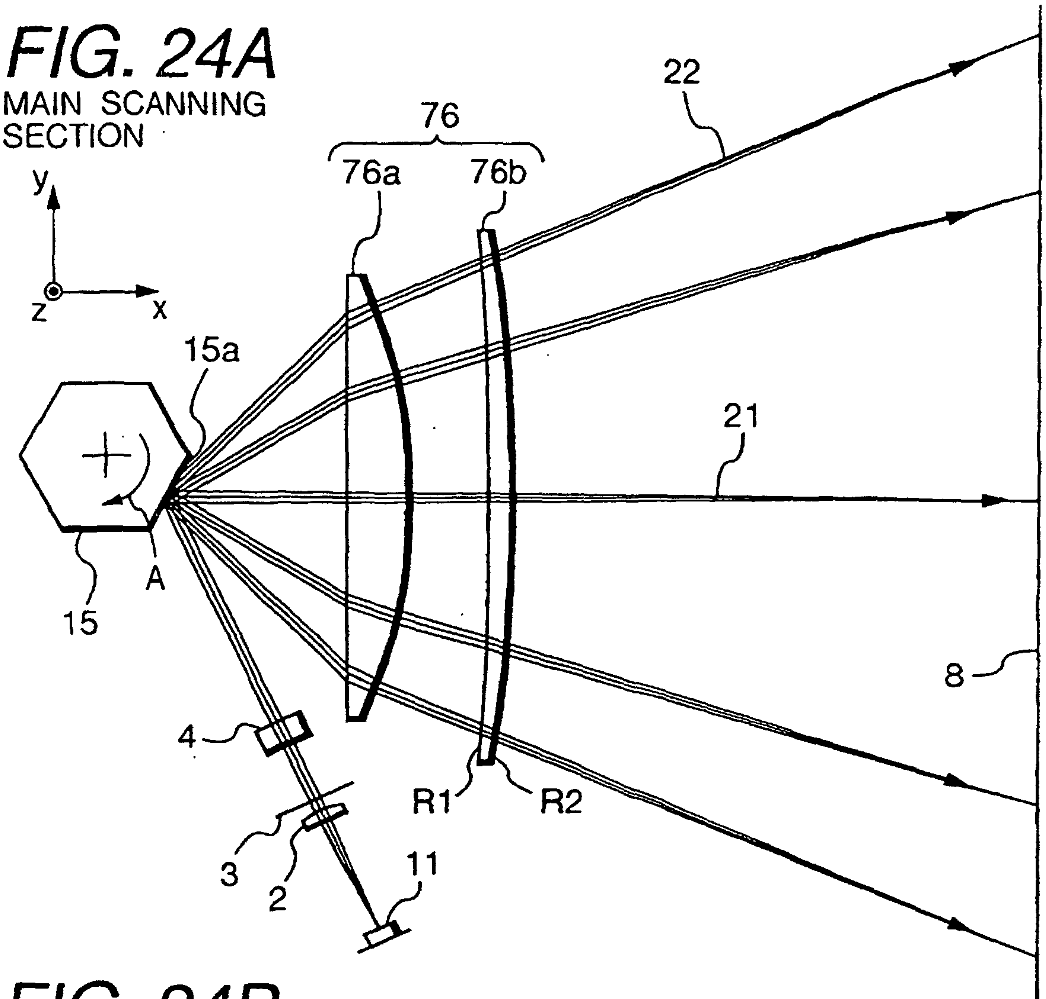


FIG. 24B

SUB SCANNING SECTION

(1) ON-AXIS BEAM

(2) MOST OFF-AXIS BEAM

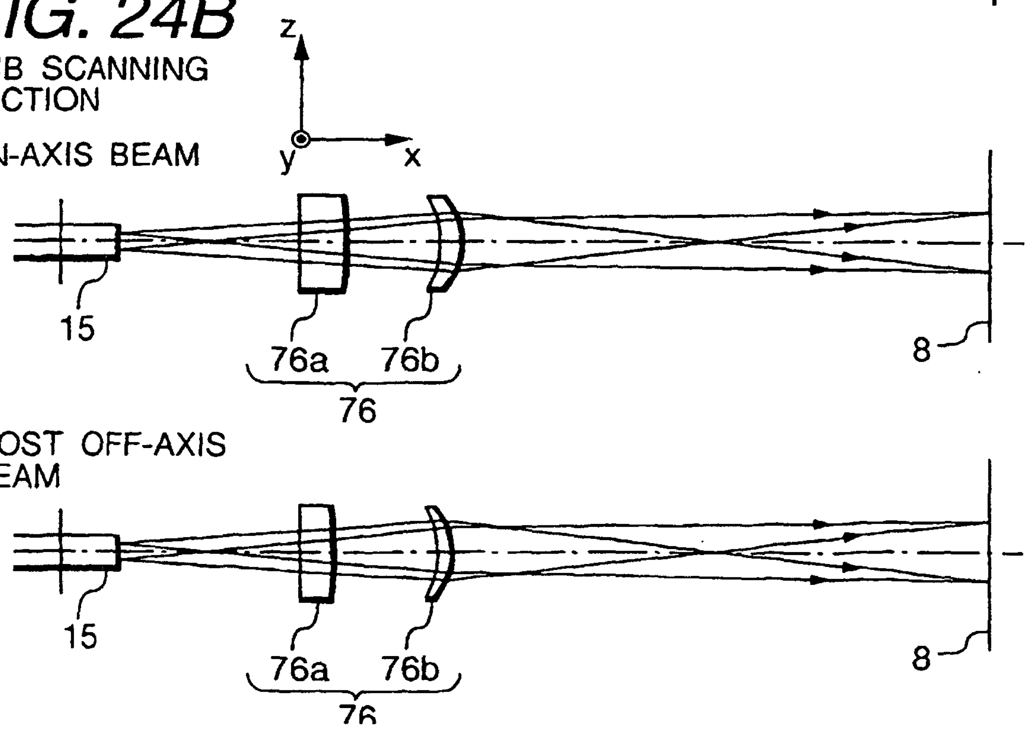

FIG. 25

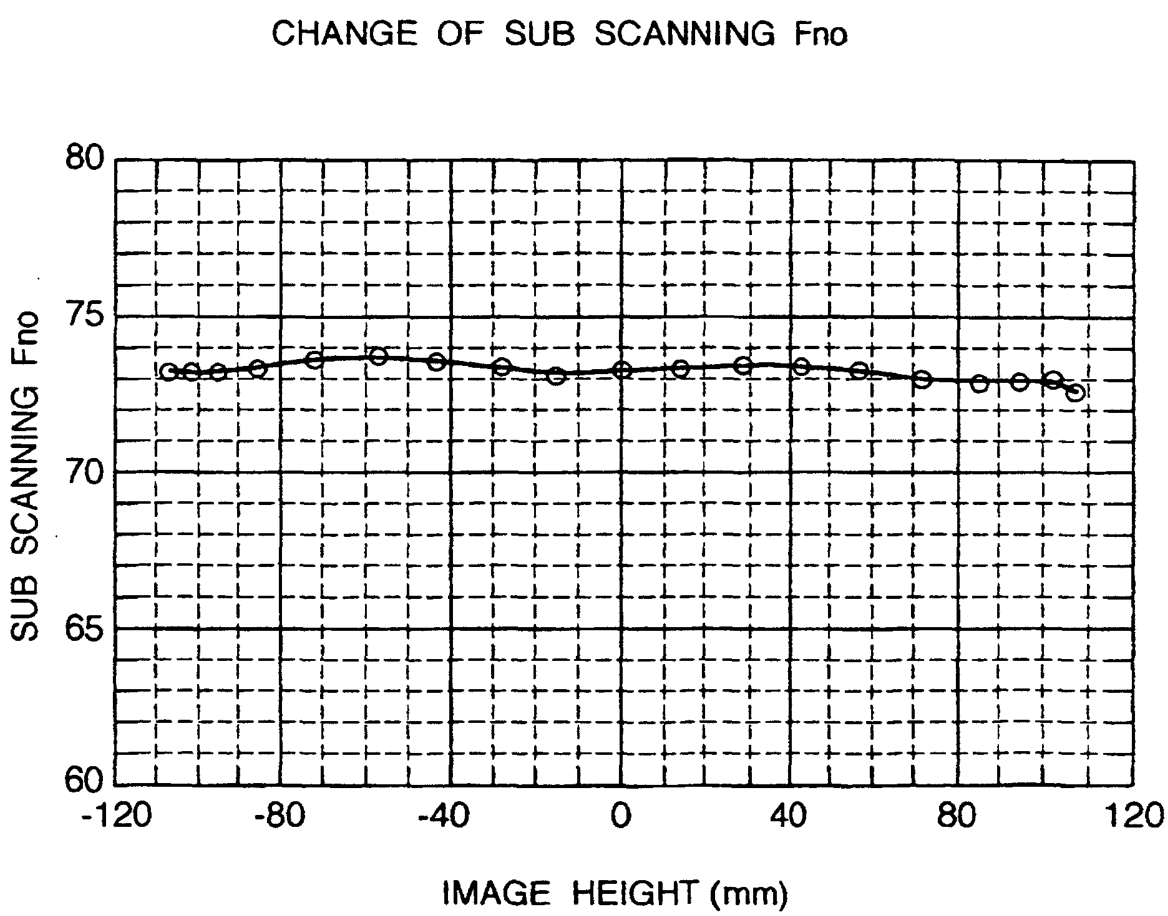
CHANGE OF SUB SCANNING Fno
SUB SCANNING Fno
80
75
70
65
60
-120
-80
-40
0
40
80
120
IMAGE HEIGHT (mm)

FIG. 26

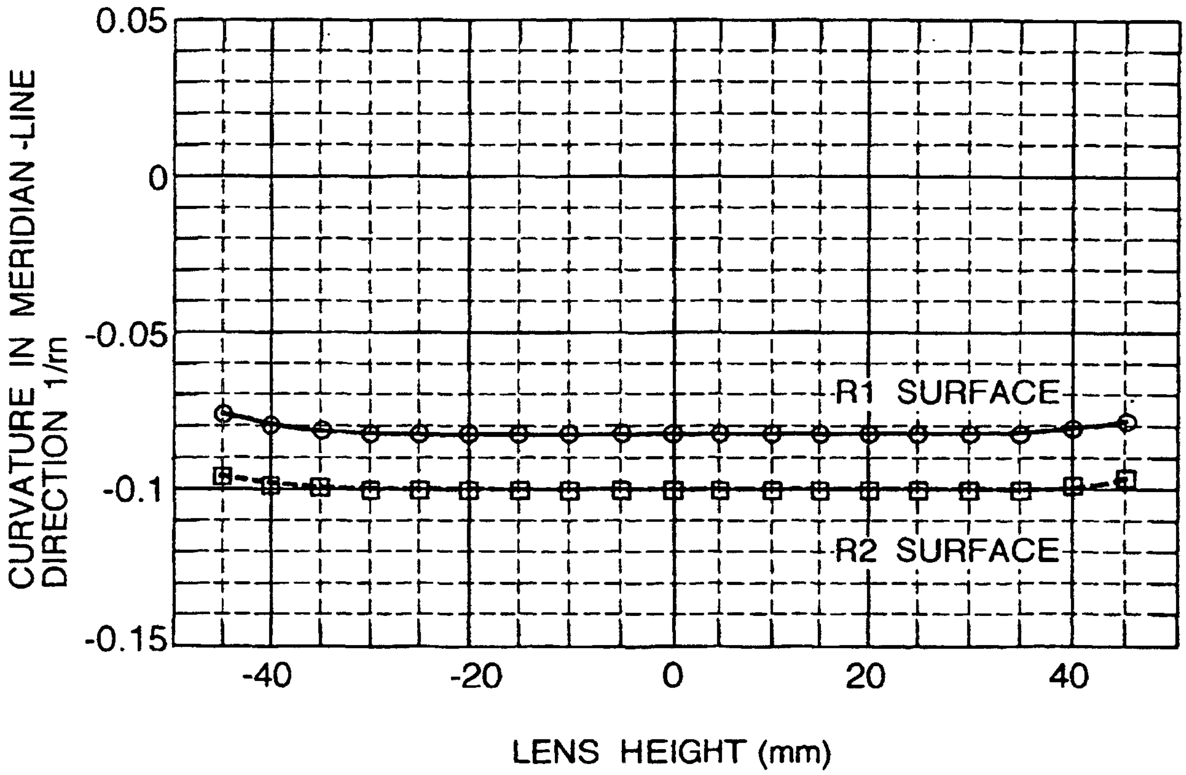
0.05
0
-0.05
-0.1
-0.15
CURVATURE IN MERIDIAN -LINE DIRECTION 1/m
R1 SURFACE
R2 SURFACE
-40
-20
0
20
40
LENS HEIGHT (mm)

FIG. 27

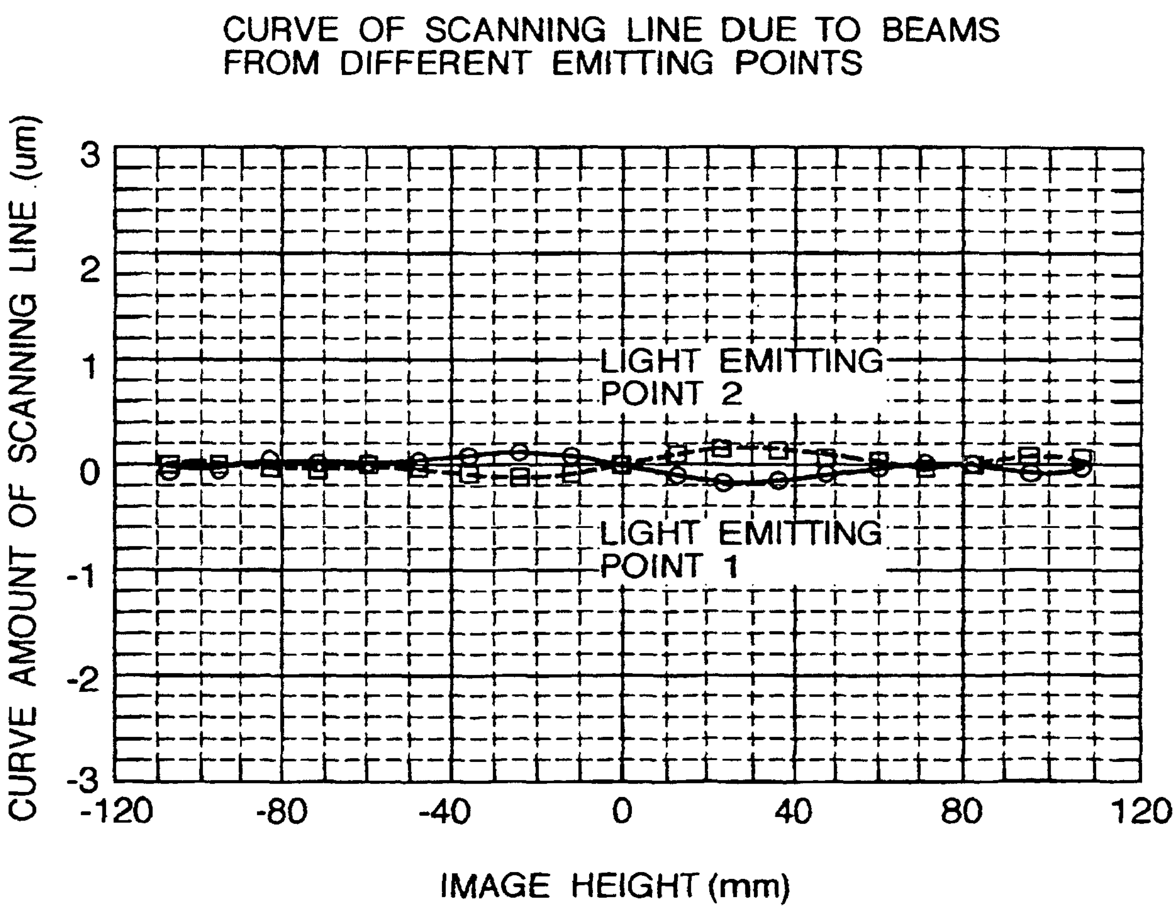
CURVE OF SCANNING LINE DUE TO BEAMS
FROM DIFFERENT EMITTING POINTS
CURVE AMOUNT OF SCANNING LINE (um)
3
2
1
0
-1
-2
-3
-120
-80
-40
0
40
80
120
IMAGE HEIGHT (mm)
LIGHT EMITTING POINT 2
LIGHT EMITTING POINT 1

FIG. 28A

MAIN SCANNING SECTION

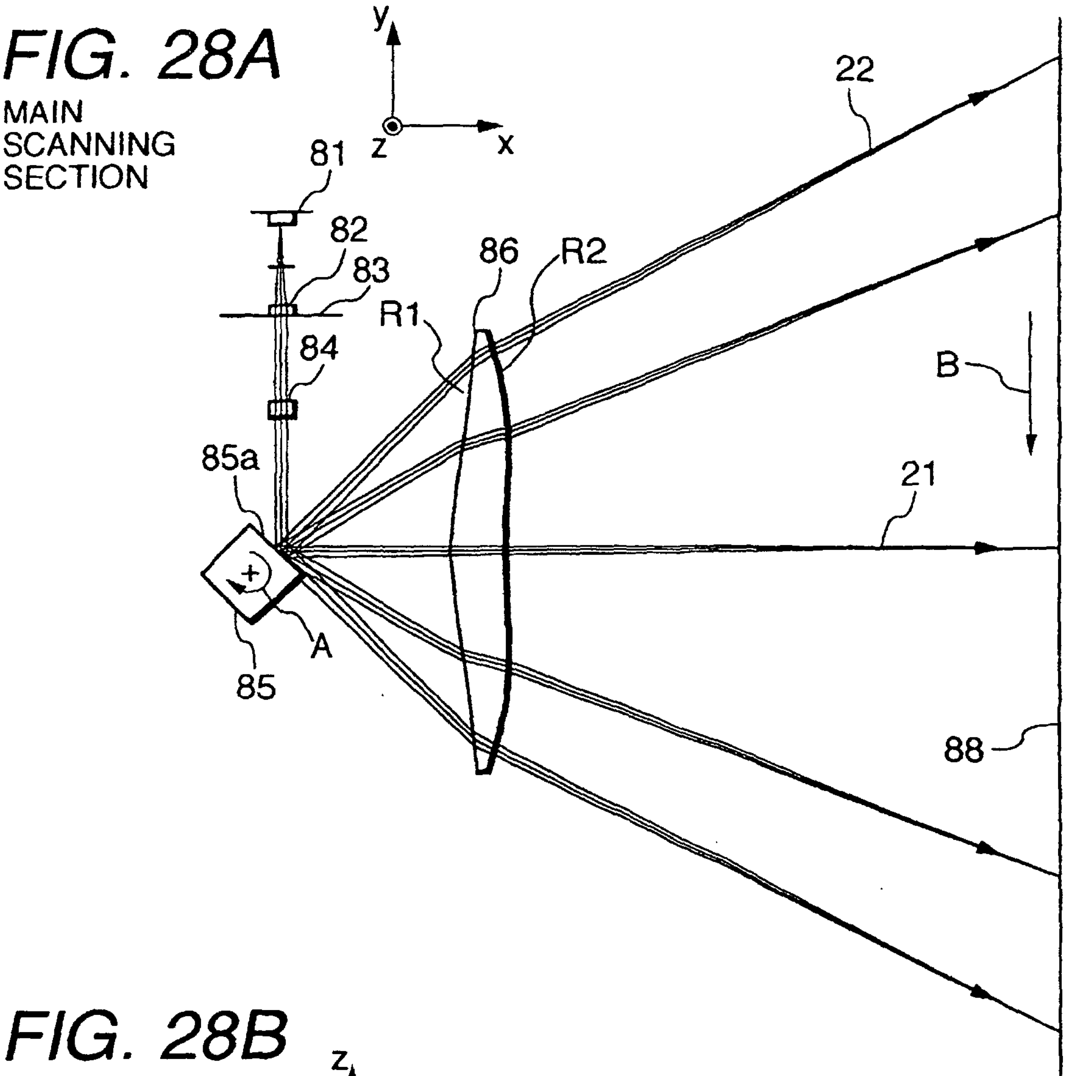


FIG. 28B

SUB SCANNING SECTION

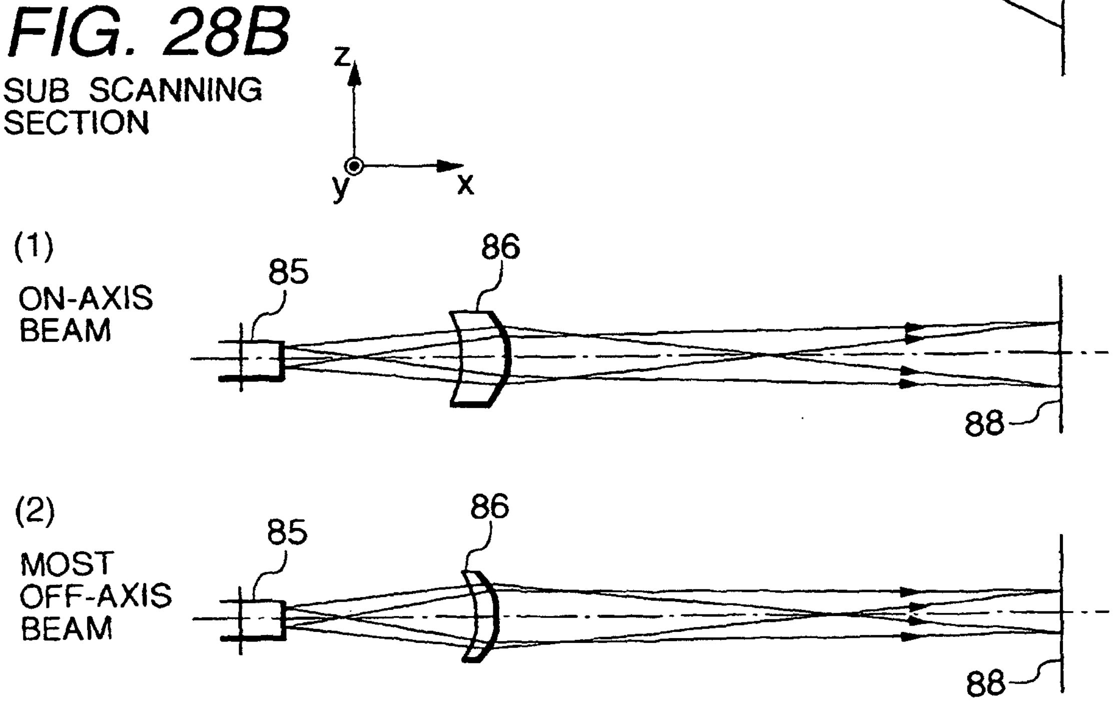

FIG. 29

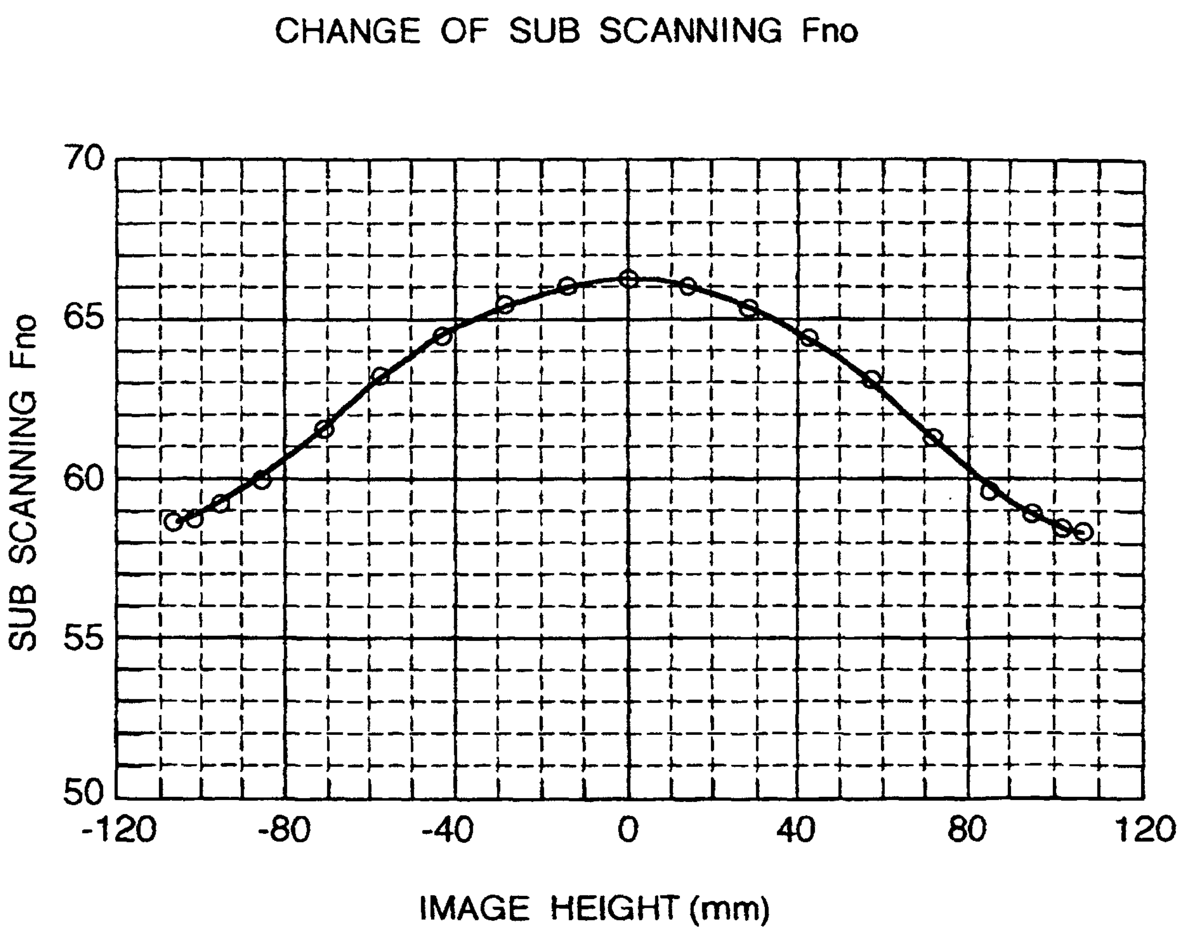
CHANGE OF SUB SCANNING Fno
SUB SCANNING Fno
70
65
60
55
50
-120
-80
-40
0
40
80
120
IMAGE HEIGHT (mm)

FIG. 30

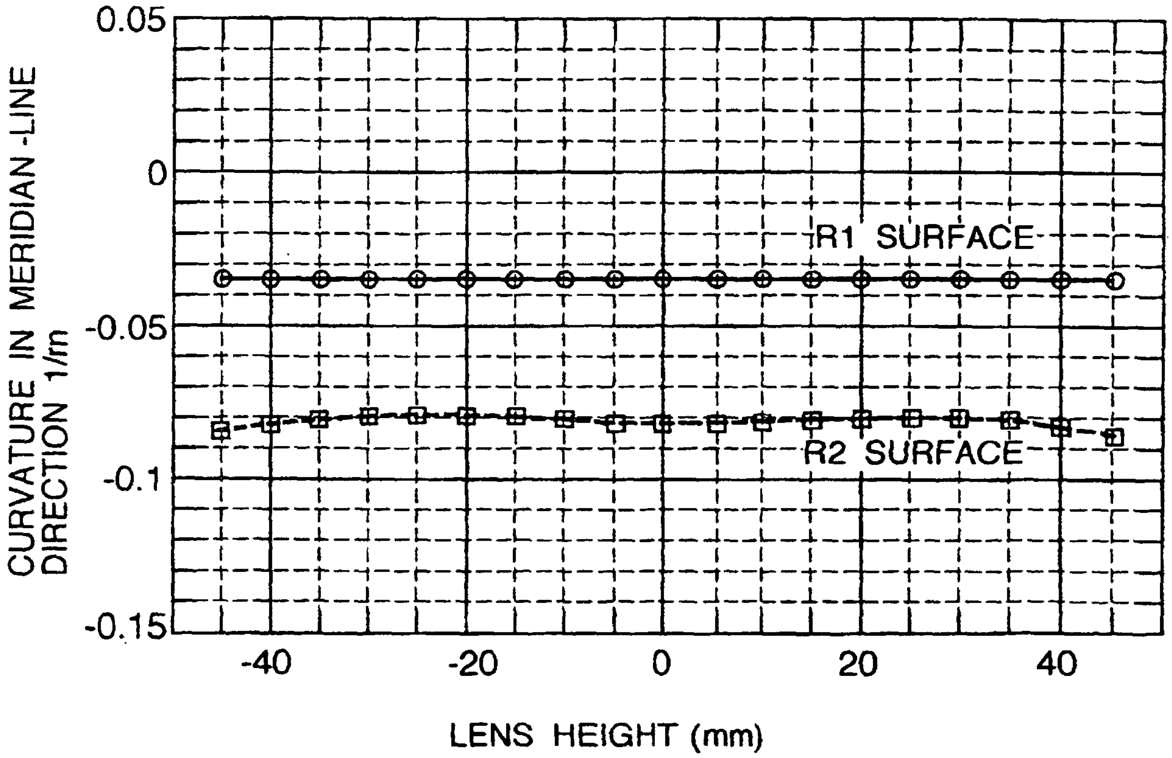
0.05
0
-0.05
-0.1
-0.15
CURVATURE IN MERIDIAN-LINE DIRECTION 1/m
R1 SURFACE
R2 SURFACE
-40
-20
0
20
40
LENS HEIGHT (mm)

FIG. 31

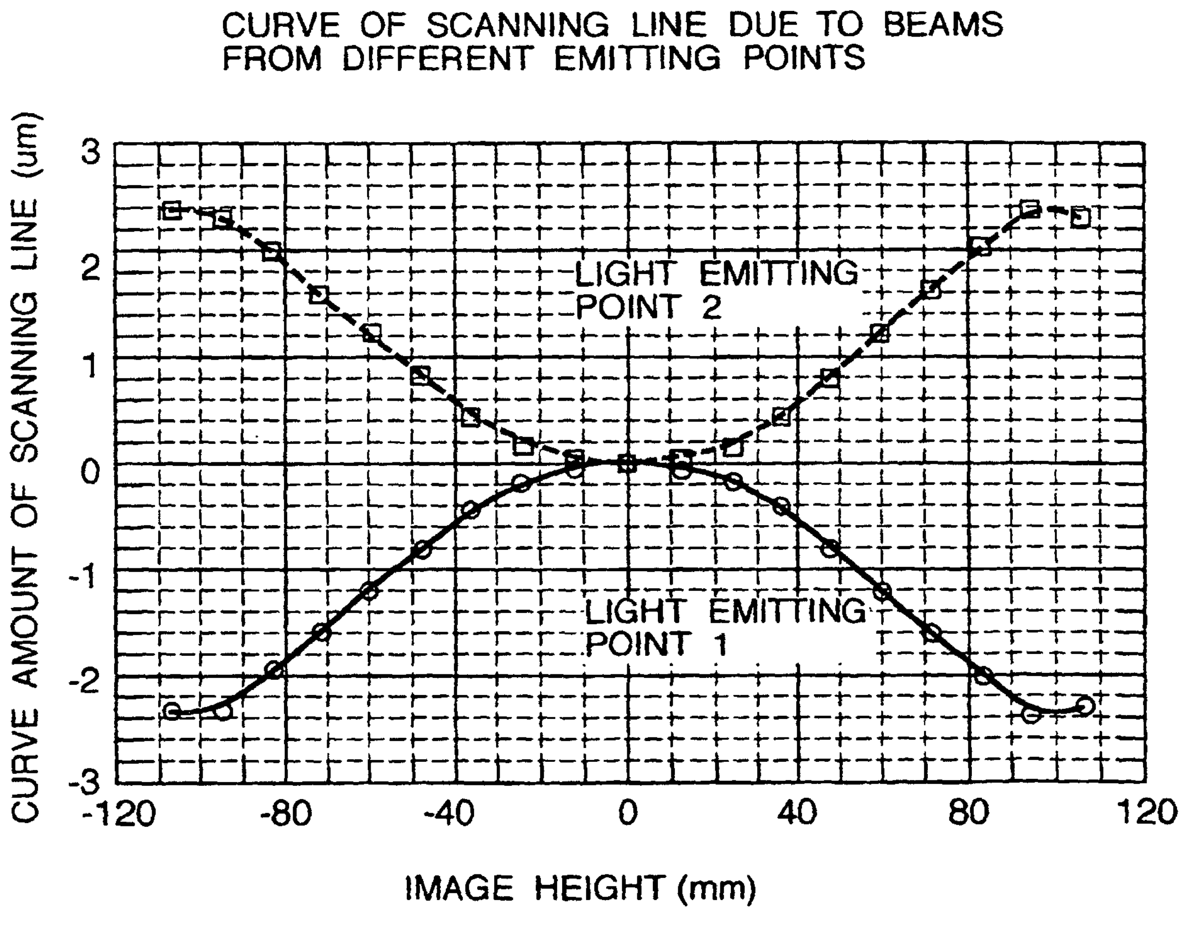
CURVE OF SCANNING LINE DUE TO BEAMS
FROM DIFFERENT EMITTING POINTS
CURVE AMOUNT OF SCANNING LINE (um)
3
2
1
0
-1
-2
-3
-120
-80
-40
0
40
80
120
LIGHT EMITTING
POINT 2
LIGHT EMITTING
POINT 1
IMAGE HEIGHT (mm)